(19) Europäisches Patentamt
European Patent Office
Office européen des brevets

(11) EP 2 063 017 B1

# (12) EUROPEAN PATENT SPECIFICATION

(45) Date of publication and mention of the grant of the patent:
**11.04.2012 Bulletin 2012/15**

(21) Application number: **07807356.6**

(22) Date of filing: **14.09.2007**

(51) Int Cl.:
***D06M 15/59*** *(2006.01)* ***A41D 31/00*** *(2006.01)*
***D03D 1/00*** *(2006.01)* ***D04B 1/00*** *(2006.01)*
***D06M 17/00*** *(2006.01)* ***D06M 23/16*** *(2006.01)*
***D06M 101/34*** *(2006.01)*

(86) International application number:
**PCT/JP2007/067952**

(87) International publication number:
**WO 2008/032824 (20.03.2008 Gazette 2008/12)**

## (54) FABRIC, COMPOSITE FABRIC, AND TEXTILE PRODUCT EXCELLING IN ABRASION RESISTANCE, AND PROCESS FOR PRODUCING THE SAME

GEWEBE, GEWEBEVERBUND, UND ABRIEBFESTES TEXTILES ERZEUGNIS SOWIE HERSTELLUNGSVERFAHREN DAFÜR

TISSU, TISSU COMPOSITE ET PRODUIT TEXTILE AYANT D'EXCELLENTES CARACTÉRISTIQUES DE RÉSISTANCE À L'ABRASION, ET PROCÉDÉ DE FABRICATION DE CEUX-CI

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.09.2006 JP 2006250083**

(43) Date of publication of application:
**27.05.2009 Bulletin 2009/22**

(73) Proprietor: **Japan Gore-Tex Inc.**
**Tokyo 156-8505 (JP)**

(72) Inventor: **SADATO, Hiroki**
**Tokyo 156-8505 (JP)**

(74) Representative: **Shanks, Andrew et al**
**Marks & Clerk LLP**
**Aurora**
**120 Bothwell Street**
**Glasgow**
**G2 7JS (GB)**

(56) References cited:
**EP-A1- 1 529 864** **EP-A1- 1 568 485**
**WO-A1-01/12889** **WO-A1-01/12889**
**GB-A- 2 316 341** **JP-A- 09 316 783**
**JP-A- 2003 236 963** **JP-A- 2005 273 053**
**JP-A- 2005 273 053**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 063 017 B1

**Description**

TECHNICAL FIELD

The present invention relates to a technology for dramatically improving the abrasion resistance of a fabric and a composite fabric for use in textile products such as clothing products, sheet materials, and the like.

BACKGROUND ART

Fabrics, used as fabrics for: clothing products such as sports clothing, coats, protective clothing, work clothing, headgear, gloves, footwear, and the like; tents; futons (comforters and spring-less mattresses); bags; chairs; and the like, are variously rubbed or snagged depending on uses. Thus, abrasion resistance is required for such fabrics. Further, the water repellencies of products like rainwear which require waterproofness, are deteriorated due to prolonged use of the products. Thus, water repellency durability is required for such products. Regarding a technology for improving the abrasion resistance of fabrics, for example, there is Patent Document 1. The Patent Document 1 relates to a method for processing a fabric having excellent abrasion resistance, and discloses a method for processing a fabric having excellent abrasion resistance, in which a hot-melt resin is arranged as an abrasion-resistance polymer on a surface of a fabric by a method such as a melt spray method and the like, and then treated with heat to fuse the abrasion-resistance polymer with each other and with the fabric, thereby forming, on the surface of the fabric, a discontinuous abrasion-resistant polymer layer having a weight per unit area of 5g/$m^2$ to 40 g/$m^2$ (see FIG. 21). [Patent Document 1] WO01/12889

As disclosed in the Patent Document 1, in the method for arranging a hot-melt resin as an abrasion-resistant polymer on a surface of a fabric by a melt spray method, the weight per unit area of the abrasion-resistant polymer is equal to or greater than 5 g/$m^2$ for providing sufficient abrasion resistance. For that reason, there is a problem that the appearance, the texture, and the lightweightness of the fabric are significantly impaired. In particular, for purposes such as fabrics used for clothing and the like in which importance is placed on appearance and texture, this problem is a big problem which hinders the fabric from being put into practical use. Further, the coating area of the polymer is large, and hence an effect of improving the water repellency durability is hardly obtained.

The present invention has been made in view of the above situation, and has been achieved based on a remarkable finding that the abrasion resistance of a fabric is significantly improved even though each of polymer dots arranged on a surface of the fabric has a small amount to such a degree that the polymer dots cannot be visually confirmed.

. A first objective of embodiments of the present invention is to provide a technology for improving the abrasion resistance of a fabric or a composite fabric for use in textile products such as clothing and the like without impairing the appearance thereof. A second objective is to provide a technology for achieving both the abrasion resistance and the lightweightness of a fabric or a composite fabric for use in textile products such as clothing and the like without impairing the appearance and the textile thereof.

**THE INVENTION**

The present invention provides a fabric having a surface which is coated with polymer dots, wherein the polymer dots have an average maximum diameter of 0.5 mm or less; wherein the fabric is a woven or a knitted fabric which has concavities and convexities on its surface, in a woven fabric where at least one of the intersections where warps are stacked on wefts and intersections where wefts are stacked on warps forms the convexities on the surface of the woven fabric, and in a knitted fabric wherein at least one of yarn intersections and yarn loops forms the convexities of the surface of the knitted fabric; and wherein 40% to 100% of the convexities are coated with the polymer dots.

Thus, a fabric of the present invention is a fabric having a surface which is coated with polymer dots, and is characterized in that the polymer dots have an average maximum diameter of 0.5 mm or less. In other words, by coating the surface of the fabric with the polymer dots as an abrasion-resistant resin and making the average maximum diameter of the polymer dots equal to or less than 0.5 mm, the abrasion resistance of the fabric can be improved without impairing the appearance of the fabric. More preferably, the polymer dots have an average maximum diameter ranging from 0.03 mm to 0.3 mm.

It is preferred that the surface-coating amount of the polymer dots ranges from 0.2 g/$m^2$ to 3.0 g/$m^2$. According to the present invention, even when the surface -coating amount of the polymer dots on the surface of the fabric is extremely small and equal to or less than 3.0 g/$m^2$, excellent abrasion resistance is obtained. As a result, both the abrasion resistance and the reduction in weight of the fabric can be achieved. Further, by making the surface-coating amount of the polymer dots on the surface of the fabric to be equal to or greater than 0.2 g/$m^2$ the effect of improving the abrasion resistance becomes marked.

it is preferred that the average interval among the polymer dots is equal to or less than 1 mm. By making the average interval among the polymer dots equal to or less than 1 mm, the polymer dots are uniformly arranged on the

surface of the fabric, thereby uniformly improving the abrasion resistance of the surface of the fabric.

It is preferred that the fabric of the present invention has concavities and convexities on its surface and at least some of the convexities on the surface of the fabric are coated with the polymer dots. It is thought that the abrasion of the fabric occurs first at the convexities on the surface of the fabric, and hence the abrasion resistance of the fabric can be improved by coating at least some of the convexities on the surface of the fabric with the polymer dots. For example, when the fabric having the concavities and the convexities on its surface is a woven fabric, at least one of intersections where warps are stacked on wefts or intersections where wefts are stacked on warps forms the convexities on the surface of the woven fabric. Further, when the fabric having the concavities and the convexities on its surface is a knitted fabric, at least one of yarn intersections or yarn loops forms the convexities on the surface of the knitted fabric. In either case, by making at least some of the convexities on the surface being coated with the polymer dots, the abrasion resistance can be improved.

40 % to 100 % of the convexities of the fabric are coated with the polymer dots. When 40 % to 100 % of the convexities are coated with the polymer dots, the effect of improving the abrasion resistance becomes more marked.

In the present invention, it is preferred that the concavities on the surface of the fabric are substantially uncoated with the polymer dots. This is because it is thought that the abrasion of the fabric occurs first at the convexities on the surface of the fabric, and hence coating the concavities on the surface with the polymer dots contributes less to the improvement of the abrasion resistance and causes the impairment of the lightweightness of the fabric and the hardening of the texture.

In the present invention, it is preferred that the polymer for the polymer dots and the polymer constituting the fabric are the same type polymer. When the polymer for the polymer dots and the polymer constituting the fabric are the same type polymer, the adhesion of the polymer dots to the fabric is enhanced, and the polymer dots are prevented from being separated from the fabric due to abrasion. As a result, the abrasion resistance of the fabric is improved. For example, it is preferred that the polymer constituting the fabric is a polyamide and the polymer dots contain the crosslinked product of a polyamide.

A textile product and a clothing product of the present invention are characterized by containing the fabric. It is preferred that the fabric is used for at least a part of a shoulder portion, an elbow portion, a knee portion, a sleeve portion, or a hem portion of the clothing product and the fabric is provided such that the surface of the fabric coated with the polymer dots is positioned on the outer side of the clothing product.

A process for producing a fabric according to the present invention is characterized by comprising the steps of: applying a polymer composition to a gravure pattern roll having concave cells on its surface; and transferring the polymer composition on the gravure pattern roll onto a surface of a fabric to coat the surface of the fabric with polymer dots. By the production process, the convexities on the surface of the fabric can be mainly coated with the polymer dots, and the concavities on the surface of the fabric can be substantially uncoated with the polymer dots.

A composite fabric of the present invention comprises a flexible film and a fabric of the present invention which is laminated on the flexible film, wherein the flexible film is laminated on a surface of the fabric which is opposite to the surface of the fabric coated with the polymer dots. As the flexible film, for example, a waterproof film and a waterproof and moisture permeable film can be used. By using the waterproof film or the waterproof and moisture permeable film, waterproofness or waterproofness/moisture permeability can be provided to the composite fabric.

For example, it is preferred that the waterproof and moisture permeable film is a porous film made from a hydrophobic resin, and it is preferred that the porous film made from the hydrophobic resin is a porous polytetrafluoroethylene film. It is preferred that the porous film made from the hydrophobic resin includes a hydrophilic resin layer on a side of the flexible film which is opposite to the side of the porous film on which the fabric coated with the polymer dots is laminated.

It is preferred that the flexible film further includes a second fabric which is laminated on the side of the flexible film which is opposite to the side of the flexible film on which the fabric coated with the polymer dots is laminated.

The present invention includes a textile product and a clothing product each of which contains the above composite fabric of the present invention. It is preferred that the composite fabric of the present invention is used for at least a part of a shoulder portion, an elbow portion, a knee portion, a sleeve portion, or a hem portion of the clothing product and the fabric is provided such that the surface of the fabric coated with the polymer dots is positioned on the outer side of the clothing product.

According to the present invention, the abrasion resistance of a fabric or a composite fabric for use in textile products such as clothing products and the like can be improved without impairing the appearance thereof.

According to the present invention, both the abrasion resistance and the lightweightness of a fabric or a composite fabric for use in textile products such as clothing products and the like can be achieved without impairing the appearance and the texture thereof.

According to the present invention, the water repellency durability of a fabric or a composite fabric for use in textile products such as clothing products and the like is significantly improved.

BRIEF DESCRIPTION OF THE DRAWINGS

[FIG. 1] An electron micrograph of a fabric 1
[FIG 2] An electron micrograph of a fabric 2
[FIG 3] An electron micrograph of a fabric 3
[FIG. 4] An electron micrograph of a fabric 4
[FIG. 5] An electron micrograph of a fabric 5
[FIG. 6] An electron micrograph of a fabric 6
[FIG 7] An electron micrograph of a fabric 7
[FIG. 8] An electron micrograph of a fabric 8
[FIG. 9] An electron micrograph of a fabric A
[FIG. 10] An electron micrograph of a fabric B
[FIG. 11] An electron micrograph of a fabric C
[FIG. 12] An electron micrograph of a fabric D
[FIG. 13] An electron micrograph of a fabric E
[FIG. 14] An electron micrograph of a fabric F
[FIG. 15] A photograph substituted for a drawing, showing the results of a water repellency test after a jacket is worn
[FIG. 16] A photograph substituted for a drawing, showing the results of a hook and loop fastener abrasion test after a jacket is worn
[FIG. 17] A photograph substituted for a drawing, showing a state of grade 4 of fabric appearance evaluation
[FIG. 18] A photograph substituted for a drawing, showing a state of grade 3 of the fabric appearance evaluation
[FIG. 19] A photograph substituted for a drawing, showing a state of grade 2 of the fabric appearance evaluation
[FIG. 20] A photograph substituted for a drawing, showing a state of grade 1 of the fabric appearance evaluation
[FIG. 21] An electron micrograph of a conventional fabric on which an abrasion-resistant polymer is formed

BEST MODE FOR CARRYING OUT THE INVENTION

A fabric of the present invention is a fabric having a surface which is coated with polymer dots, and is characterized in that the polymer dots have an average maximum diameter of 0.5 mm or less.

(1) Regarding Polymer Dots

A polymer dot is a polymer in the form of dot (in the form of projection). By coating a surface of a fabric with polymer dots, the polymer dots fix the fibers to prevent the fibers from fraying. When the fabric is subjected to friction during use, the polymer dots are first worn, thereby improving the abrasion resistance of the entire fabric. Further, when the average maximum diameter of the polymer dots are made to be equal to or less than 0.5 mm, the polymer dots are visually unnoticeable, thereby improving the abrasion resistance of the obtained fabric without impairing the appearance thereof. If the average maximum diameter of the polymer dots exceeds 0.5 mm, the polymer dots may be easily visually seen, causing the fabric to look shiny and rugged. More preferably, the polymer dots have an average maximum diameter ranging from 0.03 mm to 0.3 mm.

In the present invention, the "average maximum diameter" of the polymer dots is obtained by observing the fabric surface, on which the polymer dots are arranged, with an electron microscope at a magnification of 20 times or greater, measuring the maximum diameters of the individual polymer dots in the obtained view, and (number-) averaging the maximum diameters. It is noted that when observation is made with an electron microscope, the "maximum diameter" is the full length of each polymer dot. If the shape of the polymer dots is, for example, a perfect circle, the "maximum diameter" is the diameter. If the shape of the polymer dots is, for example, a rectangle, the "maximum diameter" is the length of the diagonal line. In other words, the "maximum diameter" means the maximum linear distance between two distant end points of each polymer dot.

Further, for the "areas" of the polymer dots, the fabric surface, on which the polymer dots are arranged, is observed with an electron microscope at a magnification of 20 times or greater, and the area of each of polymer dots confirmed in the obtained view is measured. The average value of the areas of the polymer dots is preferably equal to or greater than 0.001 $mm^2$ and more preferably equal to or greater than 0.005 $mm^2$, and preferably equal to or less than 0.3 $mm^2$ and more preferably equal to or less than 0.1 $mm^2$. If the areas of the polymer dots are excessively small, sufficient abrasion resistance is not obtained because the heights of the polymer dots cannot be increased. In this case, there may be a method for increasing the coated area rate in order to obtain sufficient abrasion resistance; however, there is the possibility of causing an adverse effect on the moisture permeability and the texture. On the other hand, if

the areas of the polymer dots are excessively large, the dots become noticeable, thereby impairing the appearance of the fabric. In addition, the polymer dots are likely to bend at the edges thereof, thereby losing the flexibility and damaging the base material at bended portions. Further, because the surfaces of the polymer dots are highly smooth, it is difficult to obtain the water repellent effect when the fabric is subjected to a water repellent treatment. The areas of the polymer dots are calculated by analyzing each dot by using, for example, appropriate computer image processing software (e.g. free software "lenaraf 200" which operates on the spreadsheet software "Excel" available from Microsoft Corporation and which is capable of measuring a length and an area in an image) using an image obtained with an electron microscope.

In the present invention, it is preferred that the maximum height of the polymer dots which coat the fabric surface is equal to or less than 0.3 mm. When the maximum height of the polymer dots is equal to or less than 0.3 mm, the polymer dots are visually unnoticeable, and are relatively difficult to sense even by touching. On the other hand, if the maximum height is greater than 0.3 mm, the shapes of the polymer dots are easily visually seen, and the fabric is easily felt to be rugged when touched. In the present invention, the "maximum height of the polymer dots" is a value obtained by measuring the thickness of the fabric before and after arranging the polymer dots, and calculating the difference therebetween.

In the present invention, the surface-coating amount of the polymer dots is preferably equal to or greater than 0.2 $g/m^2$ and more preferably equal to or greater than 0.5 $g/m^2$, and preferably equal to or less than 3.0 $g/m^2$ and more preferably equal to or less than 2.0 $g/m^2$. If the surface-coating amount of the polymer dots is less than 0.2 $g/m^2$, sufficient abrasion resistance is not obtained. On the other hand, if the surface-coating amount of the polymer dots exceeds 3.0 $g/m^2$, the texture of the fabric may become hard, and the polymer dots may be easily visually seen, causing the fabric to look shiny and rugged.

In the present invention, it is preferred that the polymer dots are unnoticeable in the appearance of the fabric. For fabrics for use in clothing products, tents, futons (comforters and spring-less mattresses), bags, chairs, and the like, importance is placed on aesthetic appearance. If the polymer dots are noticeable, the fabric is caused to look shiny and rugged, and hence the fabric surface appears to be soiled. Further, when the polymer dots are subjected to friction, the polymer dots may partially change their color (at portions which are subjected to the friction) due to the abrasion, causing the aesthetic appearance to be impaired more. By a later-described appearance evaluation method, the appearance of the fabric is categorized into the following 4 levels depending on the degree of the difference in appearance.

Grade 1: Difference in appearance is seen.
Grade 2: Slight difference in appearance is seen.
Grade 3: Difference in appearance is hardly seen.
Grade 4: No difference in appearance is seen.

Here, if the appearance is at grade 3 or grade 4, it can be determined that the difference in appearance is small. In the present invention, it is preferred that the appearance of the fabric surface is at grade 3 or higher.

In the present invention, the average interval among the polymer dots is preferably equal to or less than 1.0 mm and more preferably equal to or less than 0.5 mm. If the average interval exceeds 1.0 mm, spaces among the dots are excessively large, and the fabric is subjected to abrasion. Thus, the improvement of the abrasion resistance by the polymer dots is difficulty to obtain.

The material used for the polymer dots in the present invention is not particularly limited to a specific material as long as it is a polymer which is in a solid state at room temperature and has excellent abrasion resistance, and examples thereof include polyamide resins, polyester resins, polyurethane resins, polyolefin resins, acrylic resins, silicone resins, and the like. Among them, in light of abrasion resistance, adhesion to the fabric, and dry-cleaning resistance, polyamide resins are preferable, and crosslinked products of polyamide resins are more preferable. By using such a material, the sliding property of the abrasion-resistant polymer dots against an element (e.g., an underwear worn on the body side) which contacts with the polymer dots is improved. Further, because a polyamide resin contain a great amount of polar groups (amide group and the like) in its molecules, when the fabric is made from a polymer containing polar groups, the affinity between the polymer dots and the fabric is enhanced. Thus, the adhesion between the abrasion-resistant polymer dots and the fabric is high, and the abrasion-resistant polymer dots are highly prevented from falling off. In addition, because a melt viscosity of the polyamide resin is significantly lowered by heating the polyamide resin to the melting point or higher, the polyamide resin is easily processed.

The polyamide resin is not particularly limited to any specific one as long as it has a hot-melt property, and examples thereof include nylon 46 (A: diaminobutane, C: adipic acid), nylon 66 (A: hexamethylenediamine, C: adipic acid), nylon 610 (A: hexamethylenediamine, C: sebacic acid), and the like, which are produced by polycondensation of a diamine (A) and a dicarboxylic acid (C); nylon 6 (ε-caprolactam), nylon 12 (ω-laurotactam), and the like, which are produced by ring-opening polymerization of a cyclic lactam; nylon 11 (aminoundecanoic acid), and the like, which are produced by polycondensation of an aminocarboxylic acid; nylon copolymers (nylon 6/11, nylon 6/12, nylon 66/10, nylon 6/66/12, nylon 6/69/12, nylon 6/610/12, nylon 6/612/12, nylon 6/66/11, nylon 6/66/69/12, nylon 6/66/610/12, nylon

6/661612/12, nylon 6/66/11/12, nylon 6/69/11/12) produced by copolymerization of two or more types of raw materials of homo-nylons (diamines, dicarboxylic acids, aminocarboxylic acids, cyclic lactams, and the like); modified polyamides (N-alkoxymethylation-modfied polyamide) obtained by alkoxymethylating some of the hydrogens in the amide group in these listed nylons; and the like (the substances in the parentheses are monomers). Among them, a homopolymer or a copolymer of nylon 12 (particularly, a copolymer of nylon 12) is preferable because the melting point thereof can be easily lowered to increase the processability. As these polyamide resins, polyamide resins available from various polyamide resin supplying manufacturers can be used. For the purpose of adjusting the flexibility and the melting point, for example, a known plasticizer may be added to the polyamide resin as long as it does not impair the effect of the present invention.

The polyamide resin constituting the polymer dots and used in the present invention is preferably a crosslinked product of a polyamide resin. If the crosslinked product is used, because the heat resistance of the abrasion-resistant polymer dots and the adhesion of the abrasion-resistant polymer dots to the fabric are improved, the abrasion-resistant polymer dots are prevented from being melt, deformed, or thermally deteriorated even under the conditions of being exposed to an organic solvent and high temperature, such as, for example, dry-cleaning, ironing, and the like. One example of the crosslinked product is one obtained by crosslinking one of the above-listed polyamide resins with a crosslinker. Because a polyamide resin has an active hydrogen within the molecule, a compound having at least two functional groups which can react with this active hydrogen can be used as a crosslinker. As such a crosslinker, for example, a polyisocyanate is preferable.

Examples of the polyisocyanate include 4,4'-diphenylmethane diisocyanate (MDI), tolylene diisocyanate (TDI), xylene diisocyanate (XDI), hydrogenated XDI, 1,5-naphthalene diisocyanate (NDI), hexamethylene diisocyanate (HDI), isophorone diisocyanate (IPDI), tolidine diisocyanate (TODI), lysine diisocyanate (LDI), p-phenylene diisocyanate, trans-cyclohexane-1,4-diisocyanate, 4,4'-dicyclohexylmethane diisocyanate (hydrogenated MDI), and the like. Further, a carbodiimide-modified product, a polymeric-modified product, an isocyanurate-modified product, a biuret-modified product, an adduct compound (a reactant of a polyisocyanate and a monomeric polyol) and the like of those diisocyanates can be used. The above polyisocyanates can be used solely or as a mixture of two or more types thereof.

Further, blocked products obtained by blocking the isocyanate groups of these polyisocyanates by a known blocking agent (oximes, lactams, phenols, alcohols, and the like) can be used. For these polyisocyanates (including the block products), commercialized products available from various supplying manufacturers can be used. Particularly, as a blocked product of a polyisocyanate, an emulsion type containing water as a dispersion medium is highly safe and preferable.

It is preferred that the amount of the crosslinker is changed as appropriate according to the number of functional groups (functional groups which can react with an active hydrogen) included in one molecule of the crosslinker. For example, when the number of functional groups included in one molecule of the crosslinker is 2, the amount of the crosslinker is preferably equal to or greater than 1 part by mass and more preferably equal to or greater than 3 parts by mass, and preferably equal to or less than 30 parts by mass and more preferably equal to or less than 10 parts by mass, per 100 parts by mass of the polyamide resin. If the amount of the crosslinker is excessively small, crosslink may not be sufficiently formed, the heat resistance and the solvent resistance of the abrasion-resistant polymer dots may be insufficient. On the other hand, when the amount of the crosslinker is excessively great, there is the possibility that the resin of the abrasion-resistant polymer dots becomes fragile and is deteriorated due to the reduced light resistance.

In addition to the polyamide resin (the crosslinked product of the polyamide resin), various known additives such as a water/oil-repellent agent, a flame retardant, a coloring agent, a delustering agent, a deodorant, an antibacterial agent, an antioxidant, a filler, a plasticizer, an ultraviolet light blocking agent, a luminous agent, and the like may be added to the polymer dots according to need.

One example of the configuration of the abrasion-resistant polymer dots is a configuration in which a plurality of projections (dots) individually exist. However, even though the abrasion-resistant polymer dots form a continuous layer in appearance, the abrasion-resistant polymer dots for which the amount and the area of the resin are partially reduced can ensure flexibility, and are included in a discontinuous layer of the present invention. A polyamide resin constituting the abrasion-resistant polymer dots is generally hard, and usually inferior to, for example, polyurethane resins in flexibility. However, by providing a small amount of discontinuous polymer dots as an abrasion-resistant resin, the fabric of the present invention is capable of bending at portions where the polymer dots are not provided. Thus, even when a discontinuous abrasion-resistant resin layer made from a relatively hard resin is provided, the inherent flexibility of a flexible base material can still be maintained almost fully.

(2) Regarding Fabric Used in the Present Invention

Although the fabric used in the present invention is not particularly limited to one specific fabric, for example, woven fabrics and knitted fabrics are preferable. Examples of woven fabrics include woven fabrics of weaves such as plain weave, twill weave, sateen weave, derivative weave based on these weaves, Jacquard weave, and the like. In the

present invention, a woven fabric having plain weave is preferable. This is because a woven fabric having plain weave is preferably used for purposes, such as sports clothing, coats, protective clothing, work clothing, headgear, gloves, footwear, tent, futons (comforters and spring-less mattresses), bags, chairs, and the like, which require abrasion resistance. Regarding the knitted fabrics, their weaves are not particularly limited to a specific weave, and examples thereof include knitted fabrics of weaves such as circular knitting, warp knitting, and the like.

Further, filaments constituting the fabric are not particularly limited to a specific type, and the fabric may be any of a fabric made of monofilaments and a fabric made of multifilaments. A woven fabric and a knitted fabric made of monofilaments have more excellent abrasion resistance than a woven fabric and a knitted fabric made of multifilaments, and the textures thereof tend to be hard. When the present invention is applied to a woven fabric and a knitted fabric which are made of multifilaments and have low abrasion resistance, the effect of improving the abrasion resistance becomes marked, and the joining strength between the polymer dots and the fabric is enhanced by impregnating a part of each abrasion-resistant polymer dot into the gaps between the multifilaments. In particular, fabrics used for sports clothing, coats, protective clothing, work clothing, headgear, gloves, footwear, tents, futons (comforters and spring-less mattresses), bags, and chairs are woven fabrics or knitted fabrics almost made of multifilaments, and the present invention is preferably applicable to woven fabrics or knitted fabrics which are made of multifilaments and used for these purposes.

Examples of a material for fibers constituting the fabric include natural fibers, chemical fibers, metallic fibers, ceramics fibers, and the like. The natural fibers are not particularly limited to a specific one as long as they have certain levels of heat resistance and strength, and examples thereof include cotton, wool, hemp, animal hair, silk, and the like. Further, the chemical fibers may be any fibers as long as they have certain levels of heat resistance and strength, and examples thereof include regenerated fibers such as rayon and the like, semisynthetic fibers such as acetate and the like, nylon (polyamide) fibers, polyester fibers, acrylic fibers, polyurethane fibers, vinylon fibers, polypropylene fibers, and the like. When used for purposes such as products for sports and outdoors, work clothing, and the like, woven fabrics made of nylon (polyamide) fibers, polyester fibers, and the like are preferable in light of flexibility, strength, durability, cost, lightweightness, and the like. It is noted that depending on the material used for the polymer dots, it is difficult to apply the present invention to polyethylene fibers which do not have heat resistance. This is because heat treatment is conducted when the abrasion-resistant polymer dots are arranged.

A yarn type of the fibers constituting the fabric may be any of continuous fibers and staple fibers. Examples of a yarn type of continuous fibers include a textured yarn and a raw silk. A fabric made by using a textured yarn tends to have space among the filaments due to its structure, and thus the fibers are easy to fray by being caught by a projection. However, the interfibers can be fixed by the polymer dots by applying the present invention, thereby reducing fraying of the fibers.

When the fabric used in the present invention is used for purposes, such as rainwear and the like, which require waterproofness, it is preferred that the fabric is subjected to a water repellent treatment. Even when a later-described waterproof film or a later-described waterproof and moisture-permeable film is laminated on the fabric to form a composite fabric, if the fabric gets wet by water, the heat retaining property and the moisture permeability deteriorate because a water film forms on the fabric surface, and the comfortability deteriorates because the weight of the fabric is increased. According to the present invention, the water repellency durability of the fabric or the composite fabric containing the fabric is significantly improved. It is thought that the water repellency is affected by the adherence state of a water repellant to the fibers, the bundled state of the fibers constituting the fabric, and the like. Even when the fabric has been subjected to a water repellent treatment, if the fibers constituting the fabric are rubbed, because the molecule orientation of the water repellant is disturbed, or because the water repellant is separated from the fiber surface, or because the fibers fray such that water easily infiltrates the gaps between the fibers, the water repellency tends to be deteriorated. According to the present invention, the polymer dots provided on the fabric surface reduce the friction of the fibers subjected to a water repellent treatment, and further fix the fibers constituting the fabric, thereby maintaining the bundled state of the fibers. Thus, it is thought that the water repellency durability is improved.

Further, the present inventors have found that when the area of the polymer dots coating the fabric surface is great, the water repellency durability tends to be deteriorated. This is thought to be because the surfaces of the polymer dots are smoother than the fabric surface and the water repellant on the surfaces of the polymer dots is easily separated therefrom due to abrasion. According to the present invention, because the amount of each polymer dot coating the fabric surface is small to such an extent that the polymer dots cannot be visually confirmed, the deterioration of the water repellency durability due to the polymer dots can be prevented, which is thought to be one of the reasons for the significant improvement of the water repellency durability.

As a water repellant, there are a fluorine-based type, a silicon-based type, a paraffin-based type, and the like, each of which contains water or an organic solvent as a solvent. However, it is preferred to use a fluorine-based water repellant which is highly safe, has excellent durability and oil repellency, and contains, as a principal component, a water-based copolymer containing perfluoroalkylacrylate. As a specific example, an aqueous solution, prepared by diluting, at 1 to 10 wt%, the water/oil-repellent agent UNIDYNE TG-571G available from DAIKIN INDUSTRIES, LTD, the water/oil-repellent agent Asahi Guard AG-7000 available from ASAHI GLASS CO., LTD., or the like, is used. Further, in order to

improve the water repellency durability more, it is preferred that a crosslinker is used in combination. As crosslinkers, there are melamine resins, blocked isocyanates, glyoxal resins, and the like. By using these crosslinkers solely or in combination, the water repellency durability against washing and abrasion is improved. In a specific example, the melamine resin BECKAMINE M-3 available from DIC Corporation, the blocked isocyanate Meikanate-MF available from MEISEI CHEMICAL WORKS, LTD., or the like are mixed in a water repellant solution of 0.1 to 1 wt%, applied to the a fabric, and then heated as appropriate to a temperature at which a crosslinking reaction takes place.

Further, in order for a solution mixed with the water repellant to infiltrate the fabric, it is preferred that an infiltration assistant is used as appropriate. Examples of the infiltration assistant include water-soluble alcohols and surfactants. In addition, by adding a softener to the water repellant solution in such an amount that the water repellency is not deteriorated, the texture of the fabric can be improved. Further, according to need, a defoamer, a pH adjustor, an emulsion stabilizer, an antistatic agent, and the like can be selected and used as appropriate.

As the water repellent treatment, a method can be used, in which a fabric coated with polymer dots or a fabric obtained by laminating a later-described waterproof film or a later-described waterproof and moisture-permeable film on the fabric is coated with the dispersion solution of a water-based water repellant which is diluted to an appropriate concentration, squeezed between rolls to remove an extra solution, and subjected to drying and heat treatment by using an oven. It is also possible to coat the surface of the fabric, which has been subjected to the water repellent treatment, with polymer dots. However, in this method, there is the possibility that dots do not adhere to the fabric with sufficient strength, and there is the possibility that sufficient water repellency is not provided to the fabric because the surfaces of the dots are not coated with a water repellant. As a coating method with a water repellant, a common method such as kiss coating, immersion into a pad, spray coating, and the like can be used. Even when the fabric used for products, such as rainwear and the like, which require waterproofness, is subjected to a water repellent treatment, if the fabric is used for prolonged time, the water repellency of the fabric is deteriorated due to the fabric surface being rubbed, which was a big technological issue. However, according to the present invention, the water repellency durability of the fabric is dramatically enhanced.

The fabric used in the present invention can be dyed as appropriate. A dyeing method is not particularly limited to one specific method, and a dye and a dyeing method may be selected as appropriate depending on a material constituting the fibers.

(3) Regarding Coating Form of Polymer Dots

When the fabric used in the present invention has concavities and convexities on its surface, it is preferred that at least some of the convexities on the fabric surface are coated with the polymer dots. It is thought that abrasion of the fabric occurs first at the convexities on the fabric surface, and the abrasion resistance of the fabric can be improved by coating at least some of the convexities on the fabric surface with the polymer dots.

In the present invention, although not strictly defined, the "convexities of the fabric" are portions which are formed by the fibers constituting the fabric and which are higher in height to some extent than the surrounding portions. For example, when the fabric having concavities and convexities on its surface is a woven fabric, at least one of intersections where warps are stacked on wefts or intersections where wefts are stacked on warps form the convexities on the woven fabric surface. In other words, the woven fabric has two types of intersections, namely, intersections where warps are stacked on wefts and intersections where wefts are stacked on warps, and there are two cases, namely, a case where the two types of intersections form the convexities and a case where only any one of the two types forms the convexities. The case where the two types of intersections form the convexities is, for example, a case where a plain-woven fabric is used and the warp and the weft have similar sizes, similar stiffness, and similar weave densities. When the size of the warp is greater than that of the weft, when the weave density of the warp is higher than that of the weft, or when the weft is stiffer than the warp, the intersections where the warps are stacked on the wefts form the convexities of the woven fabric. Further, when the sizes, the weave densities, and the stiffnesses of the warp and the weft are reversed, the intersections where the wefts are stacked on the warps form the convexities of the woven fabric. For example, FIG. 9 is an electron micrograph of a surface of a woven fabric of plain weave. Convexities on the woven fabric surface are indicated by "O". Because the fiber density of the warp is higher than that of the weft, intersections where the warps are stacked on the wefts form the convexities on the woven fabric surface. Further, FIG. 12 is an electron micrograph of a surface of a circular knitted fabric. Convexities on the knitted fabric surface are indicated by "O". When the fabric having concavities and convexities on its surface is a knitted fabric, at least one of yarn intersections or yarn loops form the convexities on the knitted fabric surface. In either case, the abrasion resistance is improved by coating at least some of the convexities on the surface with the polymer dots. When the fabric is any of a woven fabric and a knitted fabric, the abrasion resistance of the obtained fabric is improved by coating at least some of the convexities on the surface with the polymer dots.

The coating rate of the polymer dots coating the convexities on the fabric surface is preferably equal to or greater than 40 %, more preferably equal to or greater than 60 %, and particularly preferably equal to or greater than

80 %. This is because the effect of improving the abrasion resistance is enhanced more by making the coating rate for the convexities on the fabric surface to be equal to or greater than 40 %. The upper limit of the coating rate for the convexities on the fabric surface is not particularly limited to a specific value, and may be 100 %. When the coating rate is 100 %, a fabric having significantly excellent abrasion resistance is obtained. The coating rate of the polymer dots coating the convexities on the fabric surface is obtained by observing the fabric, which has been treated with polymer dots, with an electron microscope at a magnification of 20 times or greater, and making a calculation by using the following formula based on the observation result.

$$\text{Convexity coating rate (\%)} = 100 * (\text{the number of convexities coated with polymer dots / the total number of convexities})$$

Further, in the present invention, the coating rate of the polymer dots coating the concavities on the fabric surface is preferably equal to or less than 40 % and more preferably equal to or less than 30 %. In addition, it is preferred that the concavities on the fabric surface are not substantially coated with the polymer dots. The abrasion of the fabric occurs at the convexities on the fabric surface. Thus, coating the concavities on the surface with the polymer dots contributes less to the improvement of the abrasion resistance, and if the coating rate for the concavities exceeds 40 %, it causes the lightweightness of the fabric to be impaired. The concavities of the fabric are portions which are formed by the fibers constituting the fabric and which are lower in height to some extent than the surrounding portions, and are portions not corresponding to the above convexities of the fabric.

The coating rate of the polymer dots coating the concavities on the fabric surface is obtained by observing the fabric, which has been treated with polymer dots, with an electron microscope at a magnification of 20 times or greater, and making a calculation by using the following formula based on the observation result.

$$\text{Concavity coating rate (\%)} = 100 * (\text{the number of concavities coated with polymer dots / the total number of concavities})$$

Further, when the fabric is a woven fabric, it is preferred that a portion including a non-intersection portion among two adjacent warps and two adjacent wefts is not substantially coated with the polymer dots. If the portion including the non-intersection portion is coated with polymer dots, the two adjacent warps and the two adjacent wefts are fixed to each other by the polymer dots, thereby deteriorating the texture of the obtained fabric.

In the present invention, it is preferred that the polymer for the polymer dots and the polymer constituting the fabric have high affinity for each other. When the polymer for the polymer dots and the polymer constituting the fabric have high affinity for each other, the adhesion between the polymer dots and the fabric is enhanced, and the polymer dots are prevented from falling off from the fabric when the fabric is rubbed. As a result, the durability of the abrasion resistance is improved. Specifically, polymers having high affinity for each other are, for example, polymers of the same type, and when the polymer constituting the fabric is a polyamide resin (nylon), it is preferred that the polymer dot contains a polyamide resin. Further, it is preferred that the adhesion is enhanced by introducing a chemical bond, such as an ionic bond, a covalent bond, and the like, between the fabric and the polymer dots. For that reason, a crosslinker and the like may be used as appropriate.

(4) Regarding Process for Producing Fabric

A process for producing a fabric according to the present invention is characterized by including the steps of: arranging a polymer composition on a surface of a fabric to coat the surface of the fabric with polymer dots; and fixing the polymer dots formed on the surface of the fabric.

The fabric of the present invention can be produced by the above production process. In other words, a direct gravure method in which a liquid polymer composition is applied to a gravure pattern roll having concave cells on its surface, and transferred onto a fabric surface, thereby coating the fabric surface with discontinuous polymer dots; an offset gravure printing method in which dots are transferred onto a fabric surface via another flat roll; and the like can be used. Alternatively, a method can be also used, in which the same polymer composition is arranged on a rotary screen or a flat screen, and transferred onto a fabric surface by a squeegee to coat the fabric surface with discontinuous polymer dots. In this case, the average maximum diameter, the size, the average interval, the area coating rate, and the like of the polymer dots formed on the fabric surface can be controlled by setting, the sizes, the intervals, and the

patterns of the concave cells in the gravure roll and holes formed in the screen, and the viscosity of the liquefaction polymer as appropriate. Further, for example, the convexities on the fabric surface can be coated with polymer dots by controlling the pressure for transferring a polymer composition, with which concave cells are filled, onto the fabric surface. In addition to the above methods, a widely-used printing method or a widely-used discontinuous coating method can be used for forming polymer dots on the convexities on the fabric surface. Further, when the polymer composition is solid, there is a method in which the polymer composition is pulverized into powder, and scattered on the fabric by using a powder coater to arrange a constant amount of the polymer composition on the fabric. However, the polymer is randomly arranged in this method, and this method is inappropriate as a method of arranging a greater amount of polymer dots on the concavities of the fabric in the present invention.

The polymer composition used in the production process of the present invention is, for example, a composition obtained by heating and melting a base resin which is a material for the polymer dots, or a composition in liquid form (including paste form) obtained by adding a solvent or a dispersion medium to the base resin. As the base resin which is a material for the polymer dots, the materials listed above as the material for the polymer dots can be used.

Examples of the solvent or the dispersion medium include water, toluene, xylene, dimethylformamide, methanol, ethanol, the mixture thereof, and the like. Among them, in light of safety and environmental conservation, it is preferred that water is used as the principal component of the solvent or the dispersion medium.

According to need, additives such as a surfactant, a crosslinker, a thickener, and the like can be further contained in the polymer composition. The surfactant serves to stably disperse a polymer in the dispersion medium and to lower the surface tension of the polymer composition, thereby improving the transfer of the polymer composition onto the fabric surface. As the surfactant, there are an nonionic-based type, an anion-based type, a cation-based type, an amphoteric-based type, and the like, and they are selected as appropriate depending on the type of the base resin which is a material for the polymer dots and the compatibility with additives. The thickener serves to adjust the viscosity of the polymer composition, thereby improving the application of the polymer composition to the gravure pattern roll and the transfer of the polymer composition onto the fabric surface. Examples of the thickener include a water-soluble polymer type such as carboxymethylcellulose, sodium polyacrylate, and the like; a natural polymer type such as gelatin, alginic acid, hyaluronic acid, and the like; and a type consisting of the derivative thereof.

The polymer dots formed on the surface of the fabric can be changed from the liquid form to the solid form by cooling; drying by heating; a crosslinking reaction by heating; and the like. When the polymer dots are the liquid of a hot-melt resin obtained after heating and melting, the polymer dots are changed into the solid form by cooling to room temperature. Further, when the polymer dots are a liquid polymer containing a solvent or a dispersion medium, the polymer dots are changed into the solid polymer by desolvation conducted by: drying by heating; and the like. When the liquid polymer is a liquid prepared by dispersing a powder polymer in a dispersion medium, the dispersion medium is removed from the liquid, and then, the obtained polymer is heated to the melting point of the polymer or higher to fuse the powder polymer molecules with each other and to cause the powder polymer to be in the massive form, thereby forming the polymer dots. At this time, a part of the melted polymer infiltrates the fabric through its surface, and enters the gaps between the filaments forming the fabric, thereby more firmly binding to the fabric. Further, the polymer dots can be changed from the liquid form to the solid form to be cured by causing the liquid polymer to contain a reactive group which is excited by light, heat, moisture, and the like to chemically react. For example, a thermal curing reaction is caused by introducing an epoxy group, or an addition reaction is caused by introducing an isocyanate group, thereby curing the polymer dots. Such a reaction can be caused not only in the polymer dots but also at the interface between the polymer dots and the fabric surface, thereby providing stronger bonding force between the polymer dots and the fabric.

(5) Regarding Composite Fabric

A composite fabric of the present invention includes a flexible film and the fabric of the present invention laminated on the flexible film, and is characterized in that the flexible film is laminated on a side opposite to the surface of the fabric coated with polymer dots.

The flexible film does not have to be specifically limited, as long as it has flexibility. Examples of the flexible film include films of a polyurethane resin, a polyester resin such as poly(ethylene terephthalate) and poly(butylene terephthalate), an acrylic resin, a polyolefin resin such as polyethylene and polyolefin, a polyamide resin, a vinyl chloride resin, synthetic rubber, natural rubber, and a fluorine-containing resin.

A thickness of the flexible film is preferably not less than 5 μm, more preferably not less than 10 μm, and is not more than 300 μm, more preferably not more than 100 μm. If the thickness of the flexible film is thinner than 5 μm, the flexible film has difficulty in handling in production, while if the thickness is over 300 μm, flexibility of the flexible film is impaired. The flexible film is measured with a dial-type thickness gauge (measured with a 1/1000mm dial-type thickness gauge manufactured by TECLOCK and without applying a load except a spring body), and an average of the measurement is considered as the thickness of the flexile film.

The flexible film used is preferably a film having, for example, a waterproof, wind-proof, or dust-proof property.

When a waterproof film is used as the flexible film, the resultant layered product can have a waterproof property. When a waterproof and moisture-permeable film is used, the resultant layered product can have a waterproof and moisture-permeable property. A film having a waterproof or waterproof and moisture-permeable property generally has also a wind-proof and a dust-proof properties.

In applications requiring particularly a waterproof property such as rainwear garments, a flexible film having a water-resistance (waterproof property) of not less than 100 cm, more preferably not less than 200 cm measured in accordance with JIS L 1092 A is preferably used.

In a preferred embodiment of the present invention, a waterproof and moisture-permeable film is used as the flexible film. The waterproof and moisture-permeable film means a flexible film having both a "waterproof property" and a "moisture-permeable property". That is, the layered product of the present invention can have the "moisture-permeable property" as well as the "waterproof property". For example, when the layered product of the present invention is processed into a garment, the vapor of sweat from the body of a person wearing the garment is released to the outside through the layered product, and thus the person can be kept away from a humid feeling during wearing. As used herein, a "moisture-permeable property" is a property of allowing water vapor to permeate. The flexible film preferably has a moisture-permeable property of, for example, not less than 50 $g/m^2$-h, more preferably not less than 100 $g/m^2$-h measured in accordance with JIS L 1099 B-2.

Examples of the waterproof and moisture-permeable film include films of hydrophilic resins such as of a polyurethane resin, a polyester resin, a silicone resin and a polyvinyl alcohol resin, and a porous film made of a hydrophobic resin (hereinafter, also referred simply to as a "hydrophobic porous film") such as polyester resin, a polyolefin resin (e.g., polyethylene, polypropylene), a fluorine-containing resin, and a polyurethane resin modified by a water repellent treatment. As used herein, the "hydrophobic resin" means a resin having a contact angle of a water drop of not less than 60 degrees (measured at 25°C), more preferable not less than 80 degrees when the resin is formed into a smooth flat plane and a water drop is put thereon.

In the hydrophobic porous film, a porous structure having pores (continuous pores) inside keeps the moisture-permeable property, and the hydrophobic resin constituting the film base material prevents water from entering the pores to exhibit the waterproof property in the film entirety. Among porous films, preferred for the waterproof and moisture-permeable film is a porous film made of a fluorine-constituting resin, and more preferred is a porous polytetrafluoroethylene film (hereinafter, also referred to as a "porous PTFE film"). Since polytetrafluoroethylene that is a resin component constituting a film base material has high hydrophobicity (water repellency), particularly the porous PTFE films can have both of excellent waterproof and moisture-permeable properties.

The porous PTFE film is obtained by mixing a fine powder of polytetrafluoroethylene (PTFE) with a molding auxiliary agent to give a molded body of a paste, removing the molding auxiliary agent from the molded body, and then expanding a product into a plane at high temperature and high speed, and thus has a porous structure. In other words, the porous PTFE film is constructed with nodes interconnected by fine crystal ribbons, which the node is an aggregate of primary particles of polytetrafluoroethylene, and fibrils, which are bundles of crystal ribbons fully expanded from the primary particles. A space defined by fibrils and nodes connecting the fibrils is a pore in the film. A porosity, a maximum pore diameter, and the like of the porous PTFE film described below can be controlled by controlling an expanding ratio and the like.

The maximum pore diameter of the hydrophobic porous film is preferably not less than 0.01 μm, more preferably not less than 0.1 μm, and is not more than 10 μm, more preferably not more than 1 μm. When the maximum pore diameter is smaller than 0.01 μm, production of the film is difficult. When larger than 10 μm, the hydrophobic porous film has a reduced waterproof property and film strength, which result in difficulty of handling of the film in subsequent steps such as layering.

The porosity of the hydrophobic porous film is preferably not less than 50%, more preferably not less than 60%, and is preferably not more than 98%, more preferably not more than 95%. By setting the porosity of the hydrophobic porous film to not less than 50%, the film can ensure a moisture-permeable property, and by setting to not more than 98%, the film can ensure its strength.

A value of the maximum pore diameter is measured in accordance with the requirement of ASTM F-316 (utilized agent: ethanol). The porosity is calculated from an apparent density (p) measured in accordance with the measuring method of apparent density specified in JIS K 6885, by the following formula.

$$\text{porosity (\%)} = (2.2-\rho)/2.2\times 100$$

A thickness of the hydrophobic porous film is preferably not less than 5 μm, more preferably not less than 10 μm, and is preferably not more than 300 μm, more preferably not more than 100 μm. When the thickness of the hydrophobic

porous film is thinner than 5 μm, the film has difficulty in its handling in production, and when thickness is more than 300 μm, the hydrophobic porous film has an impaired softness and a reduced moisture-permeable property. The hydrophobic porous film is measured with a dial-type thickness gauge (measured with a 1/1000mm dial-type thickness gauge manufactured by TECLOCK and without applying a load except a spring body), and an average of the measurement is considered as the thickness of the hydrophobic porous film

The hydrophobic porous film preferably has pores of which inside surfaces are coated with a water repellent and an oil repellant polymers for use. By coating the inside surfaces of the pores of the hydrophobic porous film with a water repellent and an oil repellant polymers, various contamination such as skin oil, machine oil, beverages, and laundry detergents are prevented from penetrating into or being held in the pores of the hydrophobic porous film. Those contaminations cause decline of hydrophobicity of PTFE preferably used in the hydrophobic porous film to result in an impaired waterproof property.

In this case, as the polymer, a polymer having a fluorine-containing side chain can be used. Details of the polymer and a method for combining it into the porous film are disclosed in, for example, WO 94/22928.

An example of the coating polymer is shown below.

As the coating polymer, preferably used is a polymer having a fluorine-containing side chain (a fluorinated alkyl moiety preferably has 4 to 16 carbon atoms) obtained by polymerization of fluoroalkyl acrylate and/or fluoroalkyl methacrylate represented by the following chemical formula (1)

[Chemical formula 1]

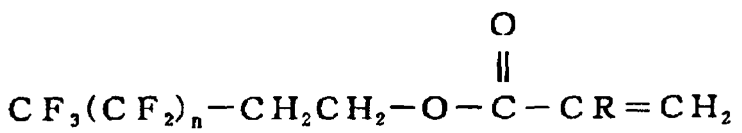

(1)

(wherein, n is an integer from 3 to 13, R is hydrogen or a methyl group).

A method of coating the inside of the pores of the porous film with the above polymer comprises preparing an aqueous micro emulsion of the polymer (average particle diameter: 0.01 to 0.5 μm) with a fluorine-containing surfactant (e.g., ammonium perfluorooctanate), impregnating the pores of the porous film with the micro emulsion, and heating. By heating, water and the fluorine-containing surfactant are removed off, and the polymer having a fluorine-containing side chain is melted to coat the inside surface of the pores of the porous film while maintains continuous pores as they are, and thus the hydrophobic porous film excellent in water and oil repellent properties can be obtained.

Other polymers can be used for the coating polymer, including "AF polymer" (trade name, DuPont), "CYTOP" (trade name, Asahi Glass Co. Ltd.), and the like. Coating the inside surface of the pores of the hydrophobic porous film with those polymers may be conducted by dissolving the polymers in an inactive solvent such as "Fluorinert" (trade name, Sumitomo 3M Limited), impregnating the porous PTFE film with the solution, and removing the solvent by evaporation.

In the present invention, it is preferred that the hydrophobic porous film has a hydrophilic resin layer on a side opposite to a side on which the fabric of the present invention coated with the polymer dots is laminated. The configuration of having this hydrophilic resin layer is particularly useful when the fabric coated with the polymer dots is used for the outer materials of clothing products. In other words, the hydrophilic resin serves to absorb moisture such as sweat and the like generated from a human body and release the moisture to the outside, and also serves to prevent various foul matters from the human body such as body fat, cosmetic oil, and the like from infiltrating the pores of the hydrophobic porous film. As described above, these foul matters deteriorate the hydrophobic property of the PTFE used preferably for the hydrophobic porous film, causing the waterproofness to be impaired. Further, by forming the hydrophilic resin layer, the mechanical strength of the hydrophobic porous film is improved. Thus, the hydrophobic porous film having excellent durability is obtained. It is satisfactory that this hydrophilic resin layer is formed on the surface of the hydrophobic porous film. However, it is preferred that the hydrophilic resin is impregnated in the surface layer portion of the hydrophobic porous film. An anchor effect is provided by impregnating the hydrophilic resin in the pores of the surface layer of the hydrophobic porous film, thereby enhancing the joining strength between the hydrophilic resin layer and the hydrophobic porous film. It is noted that if the hydrophilic resin is impregnated in the hydrophobic porous film entirely in its thickness direction, the moisture permeability is deteriorated.

As the hydrophilic resin, used is a polymer material having a hydrophilic group such as a hydroxyl group, a carboxyl group, a sulfonic acid group, and an amino acid group, having water swelling properties, and are water-insoluble. Specific examples include hydrophilic polymers such as polyvinyl alcohol, cellulose acetate, cellulose nitrate, and hydrophilic polyurethane resins, at least a part of which is crosslinked. In view of the heat-resistance, chemical-resistance,

processability, moisture-permeable property, and the like, the hydrophilic polyurethane resin is particularly preferred.

As the hydrophilic polyurethane resin, preferably used is a polyester or polyether-based polyurethane or a prepolymer having a hydrophilic group such as a hydroxyl group, an amino group, a carboxyl group, a sulfonic acid group, and an oxyethylene group. To adjust a melting point (softening point) of the resin, diisocyanates and triisocyanates having two or more isocyanate groups, and adducts thereof can be used alone or in combination as a cross-linking agent. For prepolymers having an isocyanate terminal, polyols having bi- or multi-functionality such as diols and triols, and polyamines having bi- or multi-functionality such as diamines and triamines can be used as a curing agent. To keep a moisture-permeable property high, bifunctional is more preferred than trifunctional.

A method of forming the hydrophilic resin layer such as the hydrophilic polyurethane resin on the surface of the hydrophobic porous film comprises preparing a coating liquid by dissolving the (poly)urethane resin in a solvent or by heating the (poly)urethane resin to melt, and applying the coating liquid to the hydrophobic porous film with, for example, a roll coater. A viscosity of the coating liquid suitable for making the hydrophilic resin penetrating into the surface portion of the hydrophobic porous film is not more than 20,000 cps (mPa·s), and more preferably not more than 10,000 cps (mPa·s) at an applying temperature. In the case of preparing a solution with a solvent, when the viscosity is too low, although depending on a composition of the solvent, the applied solution spreads over the hydrophobic porous film to cause hydrophilization of the whole hydrophobic porous film, and a uniform resin layer may not be formed on the surface of the hydrophobic porous film, which increases probability of defect in waterproof property. Therefore, the viscosity is thus preferably kept not less than 500 cps (mPa·s). The viscosity can be measured with a B type viscometer of Toki Sangyo Co. Ltd.

For laminating the flexible film and the fabric coated with the polymer dots, known adhesive agents can be used. Such adhesive agents include a thermoplastic resin adhesive agent and a curing resin adhesive agent which is curable by heat, light, a reaction with moisture, and the like. Examples thereof include various resin adhesive agents, such as a polyester-based type, a polyamide-based type, a polyurethane-based type, a silicone-based type, a polyacrylic-based type, a polyvinyl chloride-based type, a polybutadiene-based type, a polyolefin-based type, other rubber-based types, and the like. Among them, a preferable adhesive agent is a polyurethane-based adhesive agent. A particularly preferable polyurethane-based adhesive agent is a curing reaction type hot-melt adhesive agent. The curing reaction type hot-melt adhesive agent is an adhesive agent which is solid at room temperature and melted by heating to be low-viscosity liquid, but becomes high-viscosity liquid or is solidified by causing a curing reaction by: keeping the heated state; rising the temperature more; or contacting with moisture or a multifunctional compound containing an active hydrogen. The curing reaction proceeds by the presence of the moisture in the air, a curing catalyst, and a curing agent. One example of a preferable curing reaction type polyurethane type hot-melt adhesive agent used for bonding the flexible film and the fabric is a curing reaction type hot-melt adhesive agent having a viscosity ranging from 500 to 30,000 mPa·s (more preferably 3,000 mPa·s or less) when melted by heating to be low-viscosity liquid (i.e. when applied for boding). Here, the viscosity is a value obtained by making a measurement using an "ICI Cone and Plate Viscometer" available from RESEARCH EQUIPMENT LTD. under the conditions that the rotor is a cone type and the set temperature is 125°C.

As such a curing reaction type polyurethane type hot-melt adhesive agent, a known urethane prepolymer which is capable of causing a curing reaction by moisture (water) is preferable. For example, it can be obtained by making an addition reaction of a polyol component (a polyester polyol, a polyether polyol, and the like) and a polyisocyanate (an aliphatic or aromatic diisocyanate such as TDI, MDI, XDI (xylylene diisocyanate), IPDI (isophorone diisocyanate), and the like; a triisocyante) such that the isocyanate group remains at the terminal. In such a urethane prepolymer, due to the presence of the isocyanate group at the terminal, a curing reaction takes place by the moisture in the air. The melting temperature of this urethane prepolymer is preferably equal to or 50°C which is slightly higher than room temperature, and more preferably ranges from 80 to 150°C. One specific example of the urethane prepolymer is "Bondmaster" available from Nippon NSC Ltd. By being heated to a temperature ranging from 70 to 150°C, this urethane prepolymer turns into a melt which has applicable viscosity to a fabric and the like. A waterproof and moisture permeable film is bonded to the fabric with this melt, and then the melt becomes semi-solid by being cooled to about room temperature, thereby preventing the excessive infiltration and diffusion of the melt to the fabric and the like. Then, the curing reaction proceeds by the moisture in the air, and soft and strong adhesion can be obtained.

The method for applying the adhesive agent is not particularly limited to a specific method, and various known methods (a roll method, a spray method, a brush application method, and the like) may be used. When the composite fabric is caused to have moisture permeability, it is recommended that the adhesive agent is applied in a dotted or lined manner. The ratio of the bonding area (the application area of the adhesive agent) to the total area of the fabric surface is preferably equal to or greater than 5 % and more preferably equal to or greater than 15 %, and preferably equal to or less than 95 % and more preferably equal to or less than 50 %. Further, it is satisfied that the amount of the adhesive agent is set in light of the concavities and the convexities on the fabric surface, the fiber density, required adhesion and durability, and the like. For example, the amount is preferably equal to or greater than 2 $g/m^2$ and more preferably equal to or greater than 5 $g/m^2$, and preferably equal to or less than 50 $g/m^2$ and more preferably equal to or less than 20 $g/m^2$. If the amount of the adhesive agent is excessively small, the adhesion is insufficient, and, for example, the durability

may not be obtained to such an extent as to be resistant to cleaning. On the other hand, if the amount of the adhesive agent is excessively great, the texture of the composite fabric may become excessively hard, which is not preferable. One example of the preferable bonding method is a method in which the melt of the curing reaction type polyurethane type adhesive agent is transferred onto a flexible film by using a gravure pattern roll or sprayed onto a flexible film, a fabric is stacked thereon, and compression bonding is conducted by using a roll. In particular, when a transfer method using a roll having a gravure pattern is used, excellent adhesive force is ensured, the texture of the obtained fabric is excellent, and the yield ratio is excellent.

It is preferred that the composite fabric of the present invention further includes a second fabric which is laminated on a side of the flexible film which is opposite to the side of the flexible film on which the fabric coated with the polymer dots is laminated. This is because by laminating the second fabric, the flexible film is protected from physical load such as friction and the like, and the physical strength of the obtained composite fabric is enhanced. Further, there is no sticky feel when the skin directly touches the flexible film, the feel is improved, and the design is enhanced. The second fabric is not particularly limited to a specific fabric, and examples thereof include woven fabrics, knitted fabrics, nets, nonwoven fabrics, felts, synthetic leathers, natural leathers, and the like. Further, examples of a material constituting the fabric include natural fibers such as cotton, hemp, animal hair, and the like, synthetic fibers, metallic fibers, ceramics fibers, and the like, and they can be selected as appropriate depending on the purpose for which the composite fabric is used. For example, when the composite fabric of the present invention is used for outdoor products, it is preferred that in light of flexibility, strength, durability, cost, lightweightness, and the like, a woven fabric made of polyamide fibers, polyester fibers, or the like is used. Further, according to need, the fabric can be subjected to a known water repellant treatment, a known flexibility treatment, a known anti-static treatment, and the like.

(6) Textile products of the Present Invention

A textile product of the present invention is characterized by using the above fabric or the above composite fabric of the present invention as a fabric constituting the textile product. Examples of the textile product of the present invention include clothing products, tents, futons (comforters and spring-less mattresses), bags, chairs, and the like. Example of the clothing products include outdoor jackets, rainwear, windbreakers, slacks, chino pants, jeans, headgear, gloves, footwear, and the like. By using the fabric or the composite fabric of the present invention as fabrics constituting partially or entirely these textile product, the abrasion resistances of the obtained textile product are improved.

Among them, a clothing product in which the side of the fabric or the composite fabric of the present invention which is coated with the polymer dots is used as the outer side or the inner side of the clothing product is preferable. When used as the outer side, excellent durability is obtained, for example, with respect to the friction against the shoulder belts when a backpack or a bag is shouldered. In backpacking, there is a problem that the shoulder portion of a rainwear is rubbed against the shoulder belts of a backpack, thereby deteriorating the water repellency of the shoulder portion early. However, when the fabric of the present invention is used, the water repellency of the shoulder portion is highly prevented from being deteriorated. Further, when used as the inner side, excellent durability is obtained with respect to the friction against a clothing product worn inside and an attachment such as a Velcro fastener. The inner material of a rainwear may be subjected to a water repellent treatment for preventing rain water from infiltrating into the inner material (wicking). However, when the fabric of the present invention is used as the inner material, because the water repellency durability is improved, wicking can be prevented over prolonged time.

It is satisfied that the fabric or the composite fabric of the present invention is used for at least a part of a clothing product, and, for example, it is preferred that the fabric or the composite fabric of the present invention is used for at least one of a shoulder portion, an elbow portion, a knee portion, a sleeve portion, and a hem portion of the clothing product. This is because the shoulder portion, the elbow portion, the knee portion, the sleeve portion, the hem portion, and the like are likely to be subjected to friction due to bend and touch, and the present invention is preferably applicable thereto.

It is preferred that a textile product which contains the fabric or the composite fabric of the present invention and requires waterproofness is waterproofed by applying a sealing tape at the seam between fabrics. As a sealing tape for waterproofing the seam, a tape obtained by laminating a low-melting-point adhesive agent and a base film made of a high-melting-point resin; and the like are used as appropriate, and one example of a preferable sealing tape is a tape obtained by laminating a hot-melt adhesive agent and a base film made of a high-melting-point resin. On the surface of the base film made of the high-melting-point resin, a net, a mesh, and the like may be further laminated.

As a hot-melt adhesive agent for the sealing tape, polyethylene resins and their copolymer, polyamide resins, polyester resins, butyral resins, polyvinyl acetate resins, and their copolymers, cellulose derivatives, polymethylmethacrylates, polyvinyl ether resins, polyurethanes, polycarbonate resins, polyvinyl chloride resins, and the like can be used as appropriate. However, polyurethane resins are preferably used. This is because dry-cleaning resistance, cleaning resistance, and flexible texture are required for clothing. Further, the thickness of the hot-melt adhesive agent resin layer is preferably equal to or greater than 25 μm and more preferably equal to or greater than 50 μm, and preferably equal

to or less than 400 μm and more preferably equal to or less than 200 μm. If the hot-melt adhesive agent layer is thinner than 25 μm, the absolute amount of the adhesive agent resin is excessively small, and hence it is difficult to bond with sufficient adhesive strength. In addition, the concavities and the convexities formed by the thread at the seam cannot be completely coated with the adhesive agent, and hence the waterproofness at the sealed portion is insufficient. On the other hand, if the hot-melt adhesive agent layer is thicker than 400 μm, there is the possibility that it takes time to sufficiently melt the tape when thermocompression bonding is conducted with the tape, thereby deteriorating processability and thermally damaging the waterproof fabric to be bonded. Further, if the time for thermocompression bonding is shortened, the sheet is not sufficiently melted, and hence sufficient adhesive strength is not obtained. In addition, the texture at the sealed portion after the bonding process becomes hard, and the sealed portion is felt to be rough, for example, in the case of application to clothing.

Specific examples of the sealing tape include sealing tapes, such as T-2000, FU-700, and the like available from SAN CHEMICAL CO., LTD., MF-12T, MF-12T2, MF-10F, and the like available from NISSHINBO INDUSTRIES, INC., in which a high-melting-point polyurethane resin film and a low-melting-point polyurethane hot-melt adhesive agent are laminated; sealing tapes such as GORE-SEAMTAPE available from Japan Gore-Tex, Inc. and the like, in which a high-melting-point porous polytetrafluoroethylene resin film and a low-melting-point polyurethane hot-melt adhesive agent are laminated; and the like.

These sealing tapes can be subjected to fusion bonding by using an existing hot-air sealer, in which hot air is applied to the tape on its side which is to be in contact with the hot-melt resin, and the tape is compression-bonded to an adherend by using a pressure roll in a state where the resin is melt. For example, the QUEEN LIGHT Model QHP-805 available from QUEEN LIGHT ELECTRONIC INDUSTRIES LIMITED, and the Model 5000E available from W.L. Gore & ASSOCIATES, Inc., and the like can be used. Further, for fusion-bonding a short seam more simply, a sealing process may be conducted by using a commercially-available heat-press machine or iron. In such a case, heat is applied in a state where a sealing tape is stacked on the seam. It is satisfied that the thermocompression bonding conditions of the sealing tape are set as appropriate depending on the melting point of the hot-melt adhesive agent used for the tape, the thickness and the quality of the waterproof fabric, the fusion-bonding speed, and the like. In one example of the fusion bonding of the sealing tape, a sealing tape (preferably, polyester-urethane-based hot-melt, the flow value at 180°C preferably ranges from 40 to 200 $\times$ $10^{-3}cm^3/s$ and is more preferably 100 $\times$ $10^{-3}cm^3/s$, the thickness preferably ranges from 25 to 200 μm and more preferably ranges from 50 to 150 μm) is set at a hot-air sealer, settings are made such that the surface temperature of the hot-melt resin ranges from 150°C to 180°C and is preferably 160°C, and thermocompression bonding is conducted. Then, the heated portion is cooled to room temperature to complete the thermocompression bonding. If the flow value of the hot-melt is excessively low, the adhesive strength is insufficient. On the other hand, if the flow value of the hot-melt is excessively high, the resin leaks from the sewing holes and the tape edge and adheres to the press roll and the like. Further, if the surface temperature of the hot-melt resin is excessively low, the hot-melt resin is not sufficiently melted, causing insufficient adhesive strength. On the other hand, if the surface temperature of the hot-melt resin is excessively high, there is the possibility that the fluidity is excessively high, causing leaking of the resin from the seam, and that the hot-melt resin causes thermal decomposition, thereby lowering the adhesive strength.

## Examples

### [Evaluation Method] <Appearance Evaluation of Fabric>

The appearance of a fabric is determined by whether or not there is difference in gloss and roughness of the surface when the appearance of the fabric before arranging the polymer dots and the appearance of the fabric after arranging the polymer dots are compared. A fabric is placed on a horizontal table, irradiated with a 40 W incandescent lamp at an angle of about 60° from the far side, and photographed by using a digital camera offering 4 megapixels or more at an angle of about 60° from the near side. If difference is visually confirmed when obserbing the monochrome image on a monitor, it is determined that there is difference in appearance. The photographing was performed by using the digital camera "Cyber-shot DSC-T5" available from Sony Corporation at a resolution of 5.1 mega pixels in monotone mode for the range of 60 mm long and 70 mm wide of a fabric. The criterion is categorized into the following 4 levels based on the degree of difference in the appearance.

Grade 1: Difference in appearance is seen.
Grade 2: Slight difference in appearance is seen.
Grade 3: Difference in appearance is hardly seen.
Grade 4: No difference in appearance is seen.

<Polymer Composition Viscosity Measurement Method>

The viscosity of a paste polymer composition was measured by using the viscometer TV-10 available from TOKI SANGYO CO., LTD., to which a M4 type rotor was mounted, under the conditions of a rotation speed of 30 rpm and a measurement time of 10 seconds.

<Thickness of Fabric>

The thickness of a fabric was measured according to JIS L 1096. The measurement was made by using the thickness gauge PF-15 available from TECLOCK Corporation in a state where load other than the spring load is not applied.

<Mass (Weight per Unit Area) of (Composite) Fabric per Unit Area>

The mass ($g/m^2$) of a (composite) fabric per unit area was measured according to JIS L 1096.

<Moisture Permeability>

The moisture permeability ($g/m^2h$) of a (composite) fabric was measured according to the method of JIS L 1099 B-2

<Polymer Dot Convexity Coating Rate>

The surface of a fabric which has been treated with polymer dots was observed by using an electron microscope at a magnification of 50 times. As the electron microscope, the scanning electron microscope S-3000H available from Hitachi, Ltd. was used. At the time, the view had a range of about 2.6 mm × 1.2 mm. In the view of this range, the number of convexities on the fabric surface were counted, and regarded as the total number of convexities. Among them, the number of convexities coated with polymer dots was counted, and the polymer dot convexity coating rate was calculated by using the following formula.
Polymer dot convexity coating rate (%) = 100 × (the number of convexities coated with polymer dots / the total number of convexities)

<Polymer Dot Concavity Coating Rate>

Similarly as the above, the fabric surface was observed by using the electron microscope. At the time, the view had a range of about 2.6 mm × 1.2 mm. In the view of this range, the number of concavities on the fabric surface was counted, and regarded as the total number of concavities. Among them, the number of concavities coated with polymer dots was counted, and the polymer dot concavity coating rate was calculated by using the following formula.

**Polymer dot concavity coating rate (%) = 100 × (the number of concavities coated with polymer dots / the total number of concavities)**

<Abrasion Resistance Test of (Composite) Fabric by Hook and Loop Fastener>

The hook of a hook and loop fastener (trade name "Quicklon 1QNN-N" available from YKK corporation) was mounted to the abrasion member of the friction tester II type (Gakushin type) specified by JIS, and a sample was mounted onto the testing stand. Rubbing was made 500 times at a load of 200 g, and fluffing in appearance was determined. The test was conducted for each of the longitudinal direction and the lateral direction, and the average value was regarded as the test result. Fluffing was evaluated based on the following criterion.

Grade 1: Significant fluffing is recognized.
Grade 2: Fluffing at 10 places or more is recognized.
Grade 3: Fluffing at places less than 10 is recognized.
Grade 4: Fluffing at 3 places or less is recognized.
Grade 5: No fluffing is recognized.

<Method of Water Repellent Test after Abrasion>

Cotton cloth No.3 specified by JIS L 0803 was mounted to the sample holder of the Martindale abrasion tester specified in the JIS L 1096 E method, a sample was mounted to the standard abrasion cloth mounted side instead of a standard abrasion cloth, and abrasion treatment was conducted 500 times at a pressing load of 12 kPa. At this time, 2 $cm^3$ of ion-exchanged water was added to the cotton cloth at the sample holder, and the abrasion treatment was conducted in the wet state. The sample subjected to the abrasion treatment was air-dried at room temperature for one day or longer, and then, the spray water repellent test specified by JIS L 1092 was conducted.

<Texture Value>

For the physical properties regarding the texture of each sample, flexural properties were evaluated by using a pure bending tester (the Pure Bending Tester KES-FB2 available from KES Kato Tech Co., Ltd.), and the flexural stiffness of a fabric per 1 cm width was compared. The test was conducted for each of the longitudinal direction and the lateral direction of the (composite) fabric. A higher flexural stiffness value indicates that the texture becomes harder.

<Abrasion Fastness Test>

The abrasion fastness test was conducted under the wet condition according to JIS L 0849.

[ (1) Production of Fabric Untreated with Abrasion-Resistant Polymer

Fabric A

A woven fabric was produced, which was a lattice-pattern fabric made of faise-twist textured yarns (100 % of polyamide (nylon 6, 6)) of Semi Dull each having 34 filaments, in which the warp and the weft had a size of 78 dtex, and in which two warps and two wefts were paralleled to form each cell of the lattice with an interval of about 2.5 mm. The woven fabric was dyed by jet dyeing to prepare a fabric A. This woven fabric had a warp density of 120 yarns/2.54 cm and a weft density of 80 yarns/2.54 cm. This woven fabric had a weight per unit area of 75.0 $g/m^2$.

Fabric B

A plain-woven fabric, which was made of false-twist textured yarns (100 % of polyester) of Semi Dull each having 72 filaments and in which the warp and the weft had a size of 83 dtex, was produced and dyed by jet dyeing to prepare a fabric B. This woven fabric had a warp density of 119 yarns/2.54 cm and a weft density of 95 yarns/2.54 cm. This woven fabric had a weight per unit area of 79.0 $g/m^2$.

Fabric C

A 2/2 twill fabric, which was made of cotton of two paralleled yarns and in which the warp and the weft had a size of 74 dtex (80 count), was produced and dyed by jigger dyeing to prepare a fabric C. This twill fabric had a warp density of 190 yarns/2.54 cm and a weft density of 90 yarns/2.54 cm. This twill fabric had a weight per unit area of 176.2 $g/m^2$.

Fabric D

A smooth knitted fabric of circular knitting, which was made of false-twist textured yarns (100% of polyester) of Semi Dull each having 36 filaments and which had a size of 83 dtex, was produced and dyed by jet dyeing to prepare a fabric D. This knitted fabric had a wale density of 42 yarns/2.54 cm and a course density of 45 yarns/2.54 cm. This knitted fabric had a weight per unit area of 127.1 $g/m^2$.

Fabric E

A plain-woven fabric, which was made of false-twist textured yarns (100 % of polyamide (nylon 6, 6)) of Semi Dull each having 34 filaments and in which the warp and the weft had a size of 44 dtex, was produced and dyed by jet dyeing to prepare a fabric E. This woven fabric had a warp density of 165 yarns/2.54 cm and a weft density of 120 yarns/2.54 cm. This woven fabric had a weight per unit area of 54.5 $g/m^2$.

Fabric F

A woven fabric was produced, which was a lattice-pattern fabric made of false-twist textured yarns (100 % of polyamide (nylon 6, 6)) of Semi Dull each having 20 filaments, in which the warp and the weft had a size of 22 dtex, and in which two warps and two wefts were paralleled to form each cell of the lattice with a warp interval of about 1.5 mm and a weft interval of about 2 mm. The woven fabric was dyed by jet dyeing to prepare a fabric F. This woven fabric had a warp density of 177 yarns/2.54 cm and a weft density of 157 yarns/2.54 cm. This woven fabric had a weight per unit area of 37.1 g/$m^2$.
The properties of the fabrics A-F are shown in Table 1.
[Table 1]

| Fabric | Warp | | | Weft | | | Weight per unit area | Thickness | Weave |
|---|---|---|---|---|---|---|---|---|---|
| | Size dtex | Filament number counts | Density yarns/ 2.54 cm | Size dtex | Filament number counts | Density yarns/2.54 cm | g/$m^2$ | mm | |
| A | 78 | 34 | 120 | 78 | 34 | 80 | 75.0 | 0.22 | Lattice weave (about 2.5 mm interval) |
| B | 83 | 72 | 119 | 83 | 72 | 95 | 79.0 | 0.16 | Plain weave |
| C | 74 | - | 190 | 74 | - | 90 | 176.2 | 0.27 | 2/2 twill |
| D | 83 | 36 | 42 | - | - | 45 | 127.1 | 0.50 | Circular knitting |
| E | 44 | 34 | 165 | 44 | 34 | 120 | 54.5 | 0.14 | Plain weave |
| F | 22 | 20 | 177 | 22 | 20 | 157 | 37.1 | 0.11 | Lattice weave (about 2.5 mm interval) |

(2) Preparation of Polymer Composition for Forming Polymer Dots

The materials of the composition shown in Table 2 were sufficiently mixed to obtain a paste polymer composition for forming polymer dots. The viscosity of this polymer composition was 24000 mP·as.
[Table 2]

| Component | Amount (wt%) |
|---|---|
| Polyamide resin "VESTAMELT X1310P1" available from Evonik Degussa GmbH | 25 |
| Blocked isocyanate emulsion "NBP-75" available from MEISEI CHEMICAL WORKS, LTD. | 2 |
| Thickener "MIROX HP" available from Stockhausen GmbH | 1 |
| Water | 72 |

(3) Production of Fabric Provided with Abrasion-Resistant Polymer

Fabric 1

The polymer composition obtained as described above was transferred onto one surface of the fabric A at room temperature by a gravure printing method using a gravure roll having pyramidal concave cells with a depth of 0.06 mm at a line number of 100 lines/2.54 cm and an aperture area rate of 80% (a configuration in which square holes with a side dimension of 0.227 mm were arranged in a matrix at an interval of 0.254 mm). Next, water was removed from the transferred polymer composition, and for promoting a crosslinking reaction, the fabric onto which the polymer composition had been transferred was set to a pin tenter and placed in a hot air drying oven set at 160°C to be subjected to a dry heat treatment for 1 minute, to obtain a fabric 1 provided with discontinuous polymer dots on one surface.

Fabric 2

The polymer composition obtained as described above was transferred onto one surface of the fabric B using a gravure roll having pyramidal concave cells with a depth of 0.160 mm at a line number of 55 lines/2.54 cm and an aperture area rate of 60% (a configuration in which square holes with a side dimension of 0.386 mm were arranged in a matrix at an interval of 0.462 mm) by the same gravure printing method as that for the fabric 1. The fabric B was subjected to the same drying process as that for the fabric 1, to obtain a fabric 2 provided with discontinuous polymer dots on one surface.

Fabric 3

The polymer composition obtained as described above was transferred onto one surface of the fabric C by the same gravure printing method as that for the fabric 1. The fabric C was subjected to the same drying process as that for the fabric 1, to obtain a fabric 3 provided with discontinuous polymer dots on one surface.

Fabric 4

The polymer composition obtained as described above was transferred onto one surface of the fabric D by the same gravure printing method as that for the fabric 1. The fabric D was subjected to the same drying process as that for the fabric 1, to obtain a fabric 4 provided with discontinuous polymer dots on one surface.

Fabric 5

The polymer composition obtained as described above was transferred onto one surface of the fabric E by the same gravure printing method as that for the fabric 1. The fabric E was subjected to the same drying process as that for the fabric 1, to obtain a fabric 5 provided with discontinuous polymer dots on one surface.

Fabric 6

The polymer composition obtained as described above was transferred onto one surface of the fabric F by the same gravure printing method as that for the fabric 1. The fabric F was subjected to the same drying process as that for the fabric 1, to obtain a fabric 6 provided with discontinuous polymer dots on one surface.

Fabric 7 (Comparative Example)

The following process was conducted for forming discontinuous hot-melt resin, which is disclosed in WO01/12889, on a surface of the fabric B of Example 2. 4,4'-diphenylmethane diisocyanate (MDI), polycaprolactone diol (trade name "PLACCEL 210CP" available from DAICEL CHEMICAL INDUSTRIES, LTD.), and 1,4-butane diol were caused to react with each other in the mole ratio of MDI, polycaprolactone diol, and 1,4-butane diol which was 2:1:1.12, by using a common polymerization process of polyurethane resin to produce polyester-based hot-melt resin pellets. The flow value of this resin (which was measured at 180°C by using the flow tester "CFT-500" available from SHIMADZU CORPORATION) was 30.3 $mm^3/s$.

Next, the pellets were melt by using an extruder, and transferred to a melt-blow apparatus having single row apertures with a diameter of 0.36 mm, having 30 nozzles per 2.54 cm, and having a width of 1 m, to form hot-melt resin in the form of nonwoven fabric on the surface of the fabric B. After cooled, the fabric B on which the hot-melt resin in the form of nonwoven fabric had been formed was set to a pin tenter and placed in a hot air drying oven set at 140°C

to be subjected to a dry heat treatment for 1 minute, to obtain a fabric 7 provided with an abrasion-resistant polymer in the form of nonwoven fabric on one surface.

Fabric 8 (Comparative Example)

The polymer composition obtained as described above was transferred onto one surface of the fabric F using a gravure roll having trapezoidal concave cells with a depth of 0.220 mm at a line number of 28 lines/2.54 cm and an aperture area rate of 41% as a gravure roll used in the gravure print process (a configuration in which square holes with a side dimension of 0.58 mm were arranged in a matrix at an interval of 0.907 mm) by the same gravure printing method as that for the fabric 1. The fabric F was subjected to the same drying process as that for the fabric 1, to obtain a fabric 8 provided with discontinuous polymer dots on one surface.

For the fabrics 1 to 8, the average of the maximum diameters, the coating amount, and the average interval, of the polymer dots, the coating rates of the polymer dots to the convexities and the concavities, the weight per unit area, the thickness were measured, and the results are shown in Table 3. The results of evaluation of the abrasion resistance, the appearance, and the like are shown in Table 3. Further, the results of evaluation for the fabric untreated with polymer dots and used as a base material are also shown in Table 3.

[Table 3-1]

| | Polymer dots | | | Polymer dot coating rate | | Weight per unit area | Weight increase rate | Thickness |
|---|---|---|---|---|---|---|---|---|
| | Average maximum diameter | Coatingamount | Average interval | Convexities | Concavities | | | |
| | mm | g/m2 | mm | % | % | g/m2 | % | mm |
| Fabric 1 | 0.11 | 0.9 | 0.41 | 92.0 | 2.9 | 75.9 | 1.2 | 0.22 |
| Fabric 2 | 0.15 | 2.2 | 0.32 | 50.0 | 9.6 | 81.2 | 2.8 | 0.18 |
| Fabric 3 | 0.10 | 1.1 | 0.29 | 92.0 | 0 | 177.3 | 0.6 | 0.27 |
| Fabric 4 | 0.05 | 0.5 | 0.25 | 65.0 | 0 | 127.6 | 0.4 | 0.51 |
| Fabric 5 | 0.11 | 0.9 | 0.29 | 69.8 | 5.8 | 55.4 | 1.9 | 0.14 |
| Fabric 6 | 0.09 | 0.3 | 0.27 | 40.8 | 29.9 | 37.4 | 0.8 | 0.11 |
| Fabric 7 | ∞ | 13.3 | Continuous | 97.8 | 86.0 | 92.3 | 16.8 | 0.21 |
| Fabric 8 | 0.56 | 3.1 | 0.95 | 28.5 | 38.8 | 40.2 | 8.4 | 0.12 |
| Fabric A | - | 0 | - | 0 | 0 | 75.0 | - | 0.22 |
| Fabric B | - | 0 | - | 0 | 0 | 79.0 | - | 0.16 |
| Fabric C | - | 0 | - | 0 | 0 | 176.2 | - | 0.27 |
| Fabric D | - | 0 | - | 0 | 0 | 127.1 | - | 0.50 |
| Fabric E | - | 0 | - | 0 | 0 | 54.5 | - | 0.14 |
| Fabric F | - | 0 | - | 0 | 0 | 37.1 | - | 0.11 |

[Table 3-2]

| | Hook and loop faster abrasion resistance grade | Results of visual evaluation of appearance |
|---|---|---|
| Fabric 1 | 3-4 | 4 |
| Fabric 2 | 5 | 3 |
| Fabric 3 | 3-4 | 4 |
| Fabric 4 | 2 | 4 |
| Fabric 5 | 5 | 4 |
| Fabric 6 | 5 | 4 |
| Fabric 7 | 5 | 1 |
| Fabric 8 | 4 | 2 |
| Fabric A | 2 | - |
| Fabric B | 3 | - |
| Fabric C | 2 | - |
| Fabric D | 1 | - |
| Fabric E | 4 | - |
| Fabric F | 3 | - |

<Coating Amount of Polymer Dots and Thickness >

In the fabrics 1 to 6, the coating amount of the polymer dots ranges from 0.3 to 2.2 g/$m^2$, and the weight increase rate to the original fabric is extremely low and ranges from 0.4 to 2.8 %. Thus, this indicates that the polymer dots in the present invention do not impair the lightweightiness of the fabric. On the other hand, in the fabric 7 which is a conventional art, the weight increase rate is 17 %, which indicates that the lightweightiness is impaired. The same is indicated for the thicknesses of the fabrics. The thicknesses of the fabrics 1 to 6 are mostly unchanged from those of the original fabrics A to F, while the thickness of the fabric 7 is increased by 0.05 mm.

<Coating Rate of Polymer Dots>

Regarding the coating rate of the polymer dots calculated from an image of an SEM, in the fabrics 1 to 6, all the coating rates to the convexities are high and equal to or greater than 40 %, and all the coating rates to the concavities are low and equal to or less than 40 %. This indicates that the convexities are effectively coated with the polymer dots. On the other hand, in the fabric 7, the coating rate to the convexities is high and 97.8 %, while the coating rate to the concavities is 86 %. This indicates that the fabric surface is almost entirely coated with the abrasion-resistant polymer. Further, in the fabric 8, it is seen that large-sized polymer dots are interspersed, and hence the convexities are not effectively coated with the abrasion-resistant polymer.

<Hook and Loop Fastener Abrasion Resistance>

From the results of the hook and loop fastener abrasion resistance test, it is seen that the grades of the fabrics 1 to 6 having the polymer dots are improved by 1 to 2 grades as compared to the results of the fabrics A to F untreated with polymer dots. The polymer dot coating amount of the fabric 8 is 3.1 g/$m^2$, and greater than that of the fabric 6. However, the improvement effect is slightly less as compared to that for the fabric 6 because the convexities are not effectively coated as described above.

<Appearance>

The appearances of the fabrics 1 and 3 to 6 have grade 4, and are not almost visually indistinguishable from those of the fabrics A and C to F untreated with polymer dots. The appearance of the fabric 2 has grade 3, and when

compared to the fabric B, there is almost no difference therebetween in appearance. On the other hand, the appearance of the fabric 7 has grade 1, and it is clearly seen that as compared to the fabric B untreated with polymer dots, the polymer in the form of nonwoven fabric is coated on the fabric, and there is difference in appearance. This is thought to be because the coating amount of the polymer is extremely great and the coated abrasion-resistant polymer is fibrous and continuously long. Further, the appearance of the fabric 8 has grade 2, and as compared to the fabric F untreated with polymer dots, the gloss and the shininess caused by the polymer dots are recognized, and there is slight difference in appearance. This is because the dot size is excessively large and the dots are easily visually seen.

(4) Production of Composite Fabric Provided with Abrasion-Resistant Polymer

Composite Fabric 1

A drawn porous polytetrafluoroethylene film (available from Japan Gore-Tex, Inc, the mass per unit area is 20 g/m$^2$, the porosity is 80 %, the maximum pore diameter is 0.2 $\mu$m, the average thickness is 30 $\mu$m) having waterproofness and moisture permeability was used as a flexible film, and the following process was conducted by the method disclosed in US Patent No. 4194041. Ethylene glycol was added to a hydrophilic polyurethane prepolymer (trade name "HYPOL 2000" available from the Dow Chemical Company) having an isocyanate group at its terminal in a proportion such that the equivalent ratio of NCO/OH is 1/0.8, and mixed by means of stirring, to prepare an application liquid of the hydrophilic polyurethane prepolymer. This application liquid was applied to one surface of the flexible film by using a roll coater. At this time, the application amount was 10 g/m$^2$. Next, the flexible film was placed in an oven, which was adjusted to a temperature of 80°C and a humidity of 80 % RH, for 1 hour, causing a reaction with water, to produce a porous polytetrafluoroethylene film having a hydrophilic polyurethane resin layer.

On the surface of this porous polytetrafluoroethylene film on which the hydrophilic polyurethane layer was provided, a tricot fabric was laminated, which was made of nylon 66 fibers, had a wale size of 22 dtex and a course size of 22 dtex, a wale density of 36 yams/2.54 cm, a course density of 50 yarns/2.54 cm, and a mass per unit area of 33 g/m$^2$. The fabric 1 provided with the polymer dots on the one surface was laminated on the surface of the flexible film, which was opposite to the surface of the flexible film on which the hydrophilic polyurethane resin layer was provided, such that the surface of the fabric 1 which was not coated with the polymer dots contacted with the flexible film to obtain a composite fabric 1.

For bonding the fabric 1 and the flexible film, a polyurethane-based moisture curing reaction type hot-melt adhesive agent ("Hi-Bon 4811" available from Hitachi Kasei Polymer Co., Ltd. was used. The temperature of the adhesive agent was raised to 120°C, the melted liquid was applied to the film in a dotted manner by using a gravure roll having a cover rate of 40 % such that the transferred amount of the adhesive agent was 5 g/m$^2$, and compression bonding was conducted by using a roll. After the compression bonding by the roll, the composite fabric was left for 24 hours in a constant temperature and humidity chamber of 60°C and 80 % RH, for curing the reaction type hot-melt adhesive agent, to obtain a three-layered composite fabric.

Next, a water repellent treatment was conducted. A dispersion liquid was prepared by mixing 3 % by mass of a water repellant ("Asahi Guard AG-7000" available from MEISEI CHEMICAL WORKS, LTD.) and 97 % by mass of water, and the saturation amount or more of the dispersion liquid was applied to the surface of the fabric 1 by using a kiss coater. Then, the extra dispersion liquid was squeezed by a mangle roll. At this time, the application amount of the dispersion liquid absorbed in the fabric was about 70 g/m$^2$. Further, this fabric was subjected to a dry heat treatment by using a hot air circulating type oven under the conditions of 140°C and 30 seconds, to obtain a three-layered composite fabric 1 having waterproofness and moisture permeability.

Composite Fabric 2

The process was conducted under the same conditions as those for the composite fabric 1 except that the fabric 2 was used instead of the fabric 1 in the composite fabric 1 and the tricot fabric was not laminated, and a two-layered composite fabric was obtained. The application amount of the water repellant dispersion liquid was about 70 g/m$^2$ similarly as the composite fabric 1.

Composite Fabric 3

The process was conducted under the same conditions as those for the composite fabric 1 except that the fabric 3 was used instead of the fabric 1 in the composite fabric 1 and the tricot fabric was not laminated, and a two-layered composite fabric was obtained. The application amount of the water repellant dispersion liquid was about 87 g/m$^2$.

Composite Fabric 4

The process was conducted under the same conditions as those for the composite fabric 1 except that the fabric 4 was used instead of the fabric 1 in the composite fabric 1 and the tricot fabric was not laminated, and a two-layered composite fabric was obtained. The application amount of the water repellant dispersion liquid was about 90 $g/m^2$.

Composite Fabric 5

The process was conducted under the same conditions as those for the composite fabric 1 except that the fabric 5 was used instead of the fabric 1 in the composite fabric 1 and the tricot fabric was not laminated, and a two-layered fabric was obtained. The application amount of the water repellant dispersion liquid was about 40 $g/m^2$.

Composite Fabric 6

The process was conducted under the same conditions as those for the composite fabric 1 except that the fabric 6 was used instead of the fabric 1 in the composite fabric 1, and a three-layered composite fabric was obtained. The application amount of the water repellant dispersion liquid was about 20 $g/m^2$.

Composite Fabric 7 (Comparative Example)

The process was conducted under the same conditions as those for the composite fabric 1 except that the fabric A was used instead of the fabric 1 in the composite fabric 1, and a three-layered composite fabric 7 was obtained. The application amount of the water repellant dispersion liquid was about 70 $g/m^2$.

Composite Fabric 8 (Comparative Example)

The process was conducted under the same conditions as those for the composite fabric 1 except that the fabric B was used instead of the fabric 1 in the composite fabric 1 and the tricot fabric was not laminated, and a two-layered composite fabric 8 was obtained. The application amount of the water repellant dispersion liquid was about 75 $g/m^2$.

Composite Fabric 9 (Comparative Example)

The process was conducted under the same conditions as those for the composite fabric 1 except that the fabric C was used instead of the fabric 1 in the composite fabric 1 and the tricot fabric was not laminated, and a two-layered composite fabric 9 was obtained. The application amount of the water repellant dispersion liquid was about 90 $g/m^2$.

Composite Fabric 10 (Comparative Example)

The process was conducted under the same conditions as those for the composite fabric 1 except that the fabric D was used instead of the fabric 1 in the composite fabric 1 and the tricot fabric was not laminated, and a two-layered composite fabric 10 was obtained. The application amount of the water repellant dispersion liquid was about 90 $g/m^2$.

Composite Fabric 11 (Comparative Example)

The process was conducted under the same conditions as those for the composite fabric 1 except that the fabric E was used instead of the fabric 1 in the composite fabric 1 and the tricot fabric was not laminated, and a two-layered composite fabric was obtained. The application amount of the water repellant dispersion liquid was about 40 $g/m^2$.

Composite Fabric 12 (Comparative Example)

The process was conducted under the same conditions as those for the composite fabric 1 except that the fabric F was used instead of the fabric 1 in the composite fabric 1 and the tricot fabric was not laminated, and a two-layered composite fabric 12 was obtained. The application amount of the water repellant dispersion liquid was about 20 $g/m^2$.

Composite Fabric 13 (Comparative Example)

The process was conducted under the same conditions as those for the composite fabric 1 except that the fabric 7 was used instead of the fabric 1 in the composite fabric 1 and the tricot fabric was not laminated, and a two-layered fabric was obtained. The application amount of the water repellant dispersion liquid was about 65 g/$m^2$.

Composite Fabric 14 (Comparative Example)

The process was conducted under the same conditions as those for the composite fabric 1 except that the fabric 8 was used instead of the fabric 1 in the composite fabric 1, and a three-layered composite fabric 14 was obtained. The application amount of the water repellant dispersion liquid was about 18 g/$m^2$.

For the obtained composite fabrics, the results of evaluation of the moisture permeability, the initial water repellency, the water repellency after abrasion, and the abrasion fastness are shown in Table 4.

[Table 4]

| | Texture (bending stiffness) gf $cm^2$/cm | | Moisture permeability g/$m^2$ h | Initial water repellency | Water repettency after abrasion | Abrasion fastness Wet abrasion grade |
|---|---|---|---|---|---|---|
| | Longitudinal | Lateral | | | | |
| Composite fabric 1 | 0.24 | 0.19 | 505 | 5 | 5 | 4-5 |
| Composite fabric 2 | 0.25 | 0.22 | 825 | 5 | 5 | - |
| Composite fabric 3 | 0.48 | 0.55 | 900 | 5 | 4 | 4-5 |
| Composite fabric 4 | 0.17 | 0.17 | 520 | 5 | 4 | - |
| Composite fabric 5 | 0.18 | 0.11 | 850 | 5 | 5 | - |
| Composite fabric 6 | 0.14 | 0.11 | 545 | 5 | 5 | - |
| Composite fabric 7 | 0.20 | 0.16 | 510 | 5 | 4 | 4-5 |
| Composite fabric 8 | 0.21 | 0.19 | 850 | 5 | 4 | - |
| Composite fabric 9 | 0.31 | 0.40 | 910 | 5 | 3 | 3 |
| Composite fabric 10 | 0.15 | 0.15 | 520 | 5 | 3 | - |
| Composite fabric 11 | 0.16 | 0.09 | 880 | 5 | 4 | - |
| Composite fabric 12 | 0.12 | 0.09 | 580 | 5 | 4 | - |
| Composite fabric 13 | 0.47 | 0.36 | 750 | 5 | 4 | - |
| Composite fabric 14 | 0.20 | 0.16 | 510 | 5 | 5 | - |

<Texture of Composite Fabric>

From the measurement results of the texture values (bending stiffness) in Table 4, it is seen that the texture values of the composite fabrics 1 to 6 are slightly greater than those of the composite fabrics 7 to 12, respectively, and becomes harder but their change in the values are small and acceptable. On the other hand, the texture value of the composite fabric 13 is considerably changed from that of the composite fabric 8, and the hand feeling is clearly different.

<Moisture Permeability of Composite Fabric >

From the measurement results of the moisture permeabilities in Table 4, the moisture permeabilities of the composite fabrics 1 to 6 fall by only several percents from those of the composite fabrics 7 to 12, respectively, and the difference is extremely small to such an extent that there seems to be almost no difference in view of measurement error. On the other hand, the moisture permeability of the composite fabric 13 falls by about 12 %, and this drop seems to be relatively great. This is thought to be because the coating rate of the abrasion-resistant polymer in the form of nonwoven fabric to the fabric is high and the moisture resistance of the air space is increased due to the increased thickness of the composite fabric, thereby lowering the permeability of the fabric. For the composite fabric 14, the similar tendency is seen.

<Water Repellency of Composite Fabric>

In Table 4, the initial water repellency of any composite fabric is excellent, but as is clear from the measurement results of the water repellency after abrasion, the water repellencies after abrasion of the composite fabrics 1 to 6 are more excellent by 1 rank than those of the composite fabrics 7 to 12. The deterioration of the water repellency is attributed to the disturbance of the fluorine group orientation in the water repellant, the separation of the water repellant, and the fraying of fibers, and it is seen that the abrasion-resistant polymer dots serve to prevent the water repellency from deteriorating due to these factors. On the other hand, in the composite fabric 13, the improvement from the composite fabric 8 is not seen. This is thought to be attributed to that the effect of the water repellant is deteriorated because the polymer surface is highly smooth if the surface adhesion amount of the abrasion-resistant polymer is excessively great, and that the water repellant on the polymer surface is easy to separate due to abrasion.

<Wet Abrasion Fastness>

As is clear from the comparison of the composite fabric 3 and the composite fabric 9 in Table 4, it is seen that the polymer dots serve to improve the wet abrasion fastness of cotton fibers. In cotton products, there is a problem that excellent fastness particularly with respect to wet abrasion is difficult to obtain. It can be said that the abrasion-resistant polymer dots serve to improve this. This indicates that in addition to cotton products, for example, there is a high possibility that the fastnesses of fabrics, such as pigment-printed fabrics and the like, for which excellent abrasion fastness is difficult to obtain, can be enhanced to an acceptable level.

(5) Production of Textile products Containing Composite Fabric

A jacket having waterproofness and moisture permeability was produced by using the composite fabric 1 and the composite fabric 7. Here, four jackets, namely, two jackets in which the composite fabric 1 was used for the right body and the composite fabric 7 was used for the left body, and two jackets in which the composite fabric 7 was used for the right body and the composite fabric 1 was used for the left body, were produced. By producing so, the abrasion of each fabric and the change in water repellency of the fabric after wearing can be compared. The jackets were used for mountain climbing for three months, and the wearing time was recorded. It is noted that during the period, cleaning and tumble drying were not conducted for the jackets

The used jackets were rinsed with water and air dried, and then subjected to the water repellency test specified by JIS L 1092. The test was conducted for the upper arm portions and the upper back portions of the jackets. Further, the abrasion state of the surface of each portion was visually observed. The results are shown in Table 5.

[Table 5]

| | Composite fabric 1 | Composite fabric 7 |
|---|---|---|
| Average water repellency Upper arm portion | 3.5 | 2.8 |

(continued)

| | Composite fabric 1 | Composite fabric 7 |
|---|---|---|
| Average water repellency Upper back portion | 3.0 | 1.5 |
| Fluffing at upper back portion | Not recognized | Recognized |
| Fluffing by hook and loop fastener | Not recognized | Remarkably recognized |
| Average wearing time of four jackets: 160 hours | | |

FIG. 15 is a photograph substituted for a drawing, showing the results of the water repellency test after the jacket was worn. The left side shows the part of the composite fabric 1, and the right side shows the part of the composite fabric 7. As is clear from Table 5 and FIG. 15, it is seen that the part of the composite fabric 1 has more excellent water repellency than that of the composite fabric 7. Further, it is indicated that the water repellency of the upper back portion is inferior to that of the upper arm portion. This is thought to be because the greater abrasion load is applied to the upper back portion than the upper arm portion by the shoulder belts and the upper back portion being rubbed with each other because the wearer walks while shouldering a backpack when wearing a jacket.

Even from the results of the observation regarding fluffing, the difference between the composite fabric 1 and the composite fabric 7 is clear. FIG. 16 is a photograph substituted for a drawing, showing an abrasion state by a hook and loop fastener after the jacket is worn. The right side shows the part of the composite fabric 1, and the left side shows the part of the composite fabric 7. Although fluffing at the upper back portion is likely to occur by the upper back portion being rubbed against the shoulder belts of a backpack as described above, no fluffing was recognized in the composite fabric 1. Further, the clear difference was seen in fluffing due to the friction against a hook and loop fastener which is used to adjust the position of a hood, and significant fluffing occurred in the composite fabric 7.

INDUSTRIAL APPLICABILITY

The present invention is preferably applicable to textile product requiring excellent abrasion resistance, excellent water repellency durability, excellent appearance, and excellent texture, and also preferably applicable to clothing products, such as rainwear and the like, which require waterproofness and moisture permeability in mountain climbing and the like.

## Claims

**1.** A fabric having a surface which is coated with polymer dots, wherein the polymer dots have an average maximum diameter of 0.5 mm or less; wherein the fabric is a woven or a knitted fabric which has concavities and convexities on its surface, in a woven fabric where at least one of the intersections where warps are stacked on wefts and intersections where wefts are stacked on warps forms the convexities on the surface of the woven fabric, and in a knitted fabric wherein at least one of yarn intersections and yarn loops forms the convexities of the surface of the knitted fabric; and wherein 40% to 100% of the convexities are coated with the polymer dots.

**2.** The fabric according to claim 1, wherein the surface-coating amount of the polymer dots ranges from 0.2 $g/m^2$ to 3.0 $g/m^2$.

**3.** The fabric according to claim 1 or 2, wherein the average interval among the polymer dots is equal to or less than 1 mm.

**4.** The fabric according to any one of claims 1 to 3, wherein the polymer dots have an average maximum diameter ranging from 0.03 mm to 0.3 mm.

**5.** The fabric according to any one of claims 1 to 4, wherein the concavities on the surface of the fabric are substantially uncoated with the polymer dots.

**6.** The fabric according to any one of claims 1 to 5 wherein,
the polymer constituting the fabric is a polyamide, and
the polymer dots contain a crosslinked product of a polyamide.

**7.** A textile product containing a fabric according to any one of claims 1 to 6.

**8.** A clothing product containing a fabric according to any one of claims 1 to 6.

**9.** The clothing product according to claim 8, wherein,
the fabric is used for at least a part of a shoulder portion, an elbow portion, a knee portion, a sleeve portion, or a hem portion of the clothing product, and
the fabric is provided such that the surface of the fabric coated with the polymer dots is positioned on the outer side of the clothing product.

**10.** The clothing product according to claim 8, wherein,
the fabric is used for at least a part of the inner material of the clothing product, and
the fabric is provided such that the surface of the fabric coated with the polymer dots is positioned on the inner side (body side) of the clothing product.

**11.** A process for producing a fabric according to claim 1, the process comprising the steps of:

applying a polymer composition to a gravure pattern roll having concave cells on its surface; and
transferring the polymer composition on the gravure pattern roll onto a surface of a fabric to coat the surface of the fabric with polymer dots, so as to produce the fabric of claim 1.

**12.** A composite fabric comprising:

a flexible film; and
a fabric according to any one of claims 1 to 6 which is laminated on the flexible film,
wherein the flexible film is laminated on a side opposite to a surface of the fabric coated with the polymer dots.

**13.** The composite fabric according to claim 12, wherein the flexible film is a waterproof film.

**14.** The composite fabric according to claim 12, wherein the flexible film is a waterproof and moisture permeable film.

**15.** The composite fabric according to claim 14, wherein the waterproof and moisture permeable film is a porous film made from a hydrophobic resin.

**16.** The composite fabric according to claim 15, wherein the porous film made from the hydrophobic resin is a porous polytetrafluoroethylene film.

**17.** The composite fabric according to claim 15 or 16, wherein the porous film made from the hydrophobic resin includes a hydrophilic resin layer on a side opposite to a side of the porous film on which the fabric coated with the polymer dots is laminated.

**18.** The composite fabric according to any one of claims 12 to 17, wherein,
the flexible film further includes a second fabric which is laminated on a side opposite to a side of the flexible film on which the fabric coated with the polymer dots is laminated.

**19.** A textile product containing a composite fabric according to any one of claims 12 to 18.

**20.** A clothing product containing a composite fabric according to any one of claims 12 to 18.

**21.** The clothing product according to claim 20, wherein,
the composite fabric is used for at least a part of a shoulder portion, an elbow portion, a knee portion, a sleeve portion, or a hem portion of the clothing product, and
the fabric is provided such that the surface of the fabric coated with the polymer dots is positioned on the outer side of the clothing product.

**Patentansprüche**

**1.** Textilstoff, der eine Oberfläche aufweist, die mit Polymerpunkten beschichtet ist, wobei die Polymerpunkte einen durchschnittlichen Höchstdurchmesser von 0,5 mm oder weniger aufweisen; wobei der Textilstoff ein gewobener

oder gestrickter Textilstoff ist, der auf seiner Oberfläche Wölbungen und Vertiefungen aufweist, wobei in einem gewobenen Textilstoff mindestens eine der Schnittstellen, wo Ketten auf Schüssen gestapelt sind, und Schnittstellen, wo Schüsse auf Ketten gestapelt sind, die Wölbungen auf der Oberfläche des gewobenen Textilstoffs bildet und in einem gestrickten Textilstoff mindestens eine von Garnschnittstellen und Garnschleifen die Wölbungen auf der Oberfläche des gestrickten Textilstoffs bildet; und wobei 40 % bis 100 % der Wölbungen mit den Polymerpunkten beschichtet sind.

**2.** Textilstoff nach Anspruch 1, wobei die Oberflächenbeschichtungsmenge der Polymerpunkte im Bereich von 0,2 $g/m^2$ bis 3,0 $g/m^2$ liegt.

**3.** Textilstoff nach Anspruch 1 oder 2, wobei der durchschnittliche Abstand zwischen den Polymerpunkten gleich oder weniger als 1 mm ist.

**4.** Textilstoff nach einem der Ansprüche 1 bis 3, wobei die Polymerpunkte einen durchschnittlichen Höchstdurchmesser im Bereich von 0,03 bis 0,3 mm aufweisen.

**5.** Textilstoff nach einem der Ansprüche 1 bis 4, wobei die Vertiefungen an der Oberfläche des Textilstoffs im Wesentlichen von den Polymerpunkten unbeschichtet sind.

**6.** Textilstoff nach einem der Ansprüche 1 bis 5, wobei
das Polymer, das den Textilstoff bildet, ein Polyamid ist und
die Polymerpunkte ein vernetztes Produkt eines Polyamids enthalten.

**7.** Textilprodukt enthaltend einen Textilstoff nach einem der Ansprüche 1 bis 6,

**8.** Kleidungsprodukt enthaltend einen Textilstoff nach einem der Ansprüche 1 bis 6.

**9.** Kleidungsprodukt nach Anspruch 8, wobei
der Textilstoff für mindestens einen Teil eines Schulterabschnitts, eines Ellenbogenabschnitts, eines Knieabschnitts, eines Ärmelabschnitts oder eines Saumabschnitts des Kleidungsprodukts verwendet wird und
der Textilstoff derart bereitgestellt wird, dass die Oberfläche des mit den Polymerpunkten beschichteten Textilstoffs auf der Außenseite des Kleidungsprodukts positioniert ist.

**10.** Kleidungsprodukt nach Anspruch 8, wobei
der Textilstoff für mindestens einen Teil des Innenmaterials des Kleidungsprodukts verwendet wird und
der Textilstoff derart bereitgestellt wird, dass die Oberfläche des mit den Polymerpunkten beschichteten Textilstoffs auf der Innenseite (Körperseite) des Kleidungsprodukts positioniert ist.

**11.** Verfahren zum Herstellen eines Textilstoffs nach Anspruch 1, wobei das Verfahren die Schritte umfasst des:

Aufbringens einer Polymerzusammensetzung auf eine Tiefdruckmusterwalze, die konkave Zellen auf ihrer Oberfläche aufweist; und
Übertragens der Polymerzusammensetzung auf der Tiefdruckmusterwalze auf eine Oberfläche eines Textilstoffs, um die Oberfläche des Textilstoffs mit Polymerpunkten zu beschichten, um den Textilstoff nach Anspruch 1 herzustellen.

**12.** Verbundtextilstoffumfassend:

eine flexible Folie; und
einen Textilstoff nach einem der Ansprüche 1 bis 6, der auf die flexible Folie laminiert ist,
wobei die flexible Folie auf einer Seite laminiert wird, die einer Oberfläche des mit den Polymerpunkten beschichteten Textilstoffs entgegengesetzt ist.

**13.** Verbundtextilstoff nach Anspruch 12, wobei die flexible Folie eine wasserfeste Folie ist.

**14.** Verbundtextilstoff nach Anspruch 12, wobei die flexible Folie eine wasserfeste und feuchtigkeitsdurchlässige Folie ist.

**15.** Verbundtextilstoff nach Anspruch 14, wobei die wasserfeste und feuchtigkeitsdurchlässige Folie eine poröse Folie

ist, die aus einem hydrophoben Harz hergestellt ist.

**16.** Verbundtextilstoff nach Anspruch 15, wobei die poröse Folie, die aus dem hydrophoben Harz hergestellt ist, eine poröse Polytetrafluorethylenfolie ist.

**17.** Verbundtextilstoff nach Anspruch 15 oder 16, wobei die poröse Folie, die aus dem hydrophoben Harz hergestellt ist, eine hydrophile Harzschicht auf einer Seite, die einer Seite der porösen Folie entgegengesetzt liegt, auf die der mit Polymerpunkten beschichtete Textilstoff laminiert ist, umfasst.

**18.** Verbundtextilstoff nach einem der Ansprüche 12 bis 17, wobei
die flexible Folie des Weiteren einen zweiten Textilstoff umfasst, der auf eine Seite, die einer Seite der flexiblen Folie entgegengesetzt liegt, auf die der mit Polymerpunkten beschichtete Textilstoff laminiert ist, laminiert wird.

**19.** Textilstoffprodukt enthaltend einen Verbundtextilstoff nach einem der Ansprüche 12 bis 18.

**20.** Kleidungsprodukt enthaltend einen Verbundtextilstoff nach einem der Ansprüche 12 bis 18.

**21.** Kleidungsprodukt nach Anspruch 20, wobei
der Verbundtextilstoff für mindestens einen Teil eines Schulterabschnitts, eines Ellenbogenabschnitts, eines Knieabschnitts, eines Ärmelabschnitts oder eines Saumabschnitts des Kleidungsprodukts verwendet wird und
der Textilstoff derart bereitgestellt wird, dass die Oberfläche des mit den Polymerpunkten beschichteten Textilstoffs auf der Außenseite des Kleidungsprodukts positioniert ist.

## Revendications

**1.** Textile ayant une surface revêtue de points de polymère, les points de polymère ayant un diamètre maximal moyen de 0,5 mm ou moins; le textile étant un textile tissé ou tricoté ayant des concavités et des convexités sur sa surface, dans lequel, dans un textile tissé, au moins l'une des intersections dans lesquelles les chaînes sont empilées sur les trames et les intersections dans lesquelles les trames sont empilées sur les chaînes forme les convexités à la surface du textile tissé, et dans un textile tricoté, au moins l'une des intersections du fil et des boucles de fil forme les convexités sur la surface du textile tricoté; et dans lequel 40 % à 100 % des convexités sont revêtus des points de polymère.

**2.** Textile selon la revendication 1, dans lequel la quantité de revêtement de surface des points de polymère s'étend de 0,2 g/$m^2$ à 3,0 g/$m^2$.

**3.** Textile selon la revendication 1 ou 2, dans lequel l'intervalle moyen parmi les points de polymère est égal ou inférieur à 1 mm.

**4.** Textile selon l'une quelconque des revendications 1 à 3, dans lequel les points de polymère ont un diamètre maximal moyen s'étendant de 0,03 mm à 0,3 mm.

**5.** Textile selon l'une quelconque des revendications 1 à 4, dans lequel les concavités à la surface du textile sont substantiellement non revêtues de points de polymère.

**6.** Textile selon l'une quelconque des revendications 1 à 5, dans lequel,
le polymère constituant le textile est un polyamide, et
les points de polymère contiennent un produit réticulé d'un polyamide.

**7.** Produit textile contenant un textile selon l'une quelconque des revendications 1 à 6.

**8.** Produit d'habillement contenant un textile selon l'une quelconque des revendications 1 à 6.

**9.** Produit d'habillement selon la revendication 8, dans lequel,
le textile est utilisé pour au moins une partie d'une portion d'épaule, d'une portion de coude, d'une portion de genou, d'une portion de manche, ou d'une portion d'ourlet du produit d'habillement, et
le textile est proposé de sorte que la surface du textile revêtue des points de polymère soit positionnée sur le côté

externe du produit d'habillement.

**10.** Produit d'habillement selon la revendication 8, dans lequel,
le textile est utilisé pour au moins un partie du matériau interne du produit d'habillement, et
le textile est proposé de sorte que la surface du textile revêtue des points de polymère soit positionnée sur le côté interne (côté corps) du produit d'habillement.

**11.** Procédé de production d'un textile selon la revendication 1, le procédé comprenant les étapes de:

application d'une composition polymère à un cylindre de gravure à motifs disposant de cellules concaves à sa surface; et
transfert de la composition polymère sur le cylindre de gravure à motifs sur une surface d'un textile pour revêtir la surface du textile avec les points de polymère, afin de produire le textile selon la revendication 1.

**12.** Textile composite comprenant:

un film souple; et
un textile selon l'une quelconque des revendications 1 à 6 qui est stratifié sur le film souple,
dans lequel le film souple est stratifié sur un côté opposé à une surface du textile revêtue des points de polymère.

**13.** Textile composite selon la revendication 12, dans lequel le film souple est un film imperméable à l'eau.

**14.** Textile composite selon la revendication 12, dans lequel le film souple est un film imperméable à l'eau et perméable à l'humidité.

**15.** Textile composite selon la revendication 14, dans lequel le film imperméable à l'eau et perméable à l'humidité est un film poreux fabriqué à partir d'une résine hydrophobe.

**16.** Textile composite selon la revendication 15, dans lequel le film poreux fabriqué à partir de la résine hydrophobe est un film poreux de polytétrafluoroéthylène.

**17.** Textile composite selon la revendication 15 ou 16, dans lequel le film poreux fabriqué à partir de la résine hydrophobe inclut une couche de résine hydrophile sur un côté opposé à un coté du film poreux sur lequel le textile revêtu des points de polymère est stratifié.

**18.** Textile composite selon l'une quelconque des revendications 12 à 17, dans lequel,
le film souple inclut en outre un second textile qui est stratifié sur un côté opposé à un côté du film souple sur lequel le textile revêtu des points de polymère est stratifié.

**19.** Produit textile contenant un textile composite selon l'une quelconque des revendications 12 à 18.

**20.** Produit d'habillement contenant un textile composite selon l'une quelconque des revendications 12 à 18.

**21.** Produit d'habillement selon la revendication 20, dans lequel,
le textile composite est utilisé pour au moins une partie d'une portion d'épaule, d'une portion de coude, d'une portion de genou, d'une portion de manche, ou d'une portion d'ourlet du produit d'habillement, et
le textile est proposé de sorte que la surface du textile revêtue des points de polymère soit positionnée sur le côté externe du produit d'habillement.

[Fig. 1]

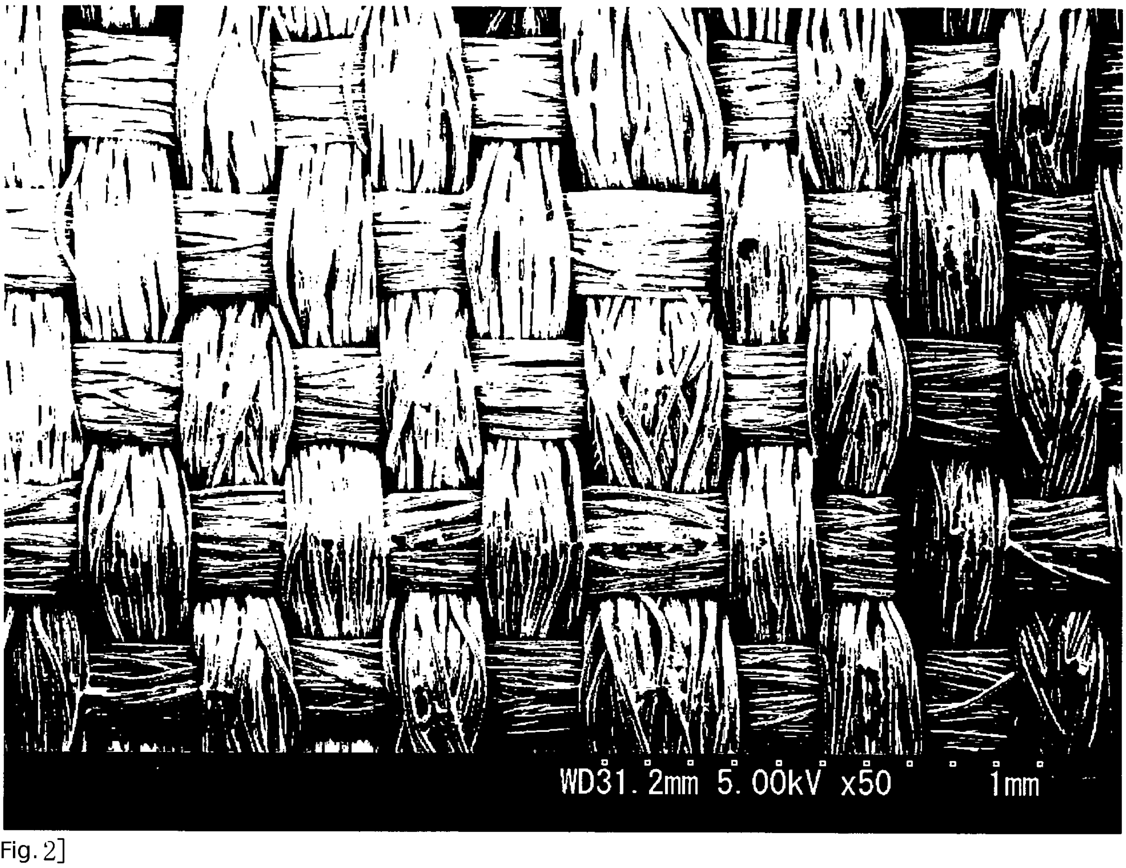


[Fig. 2]

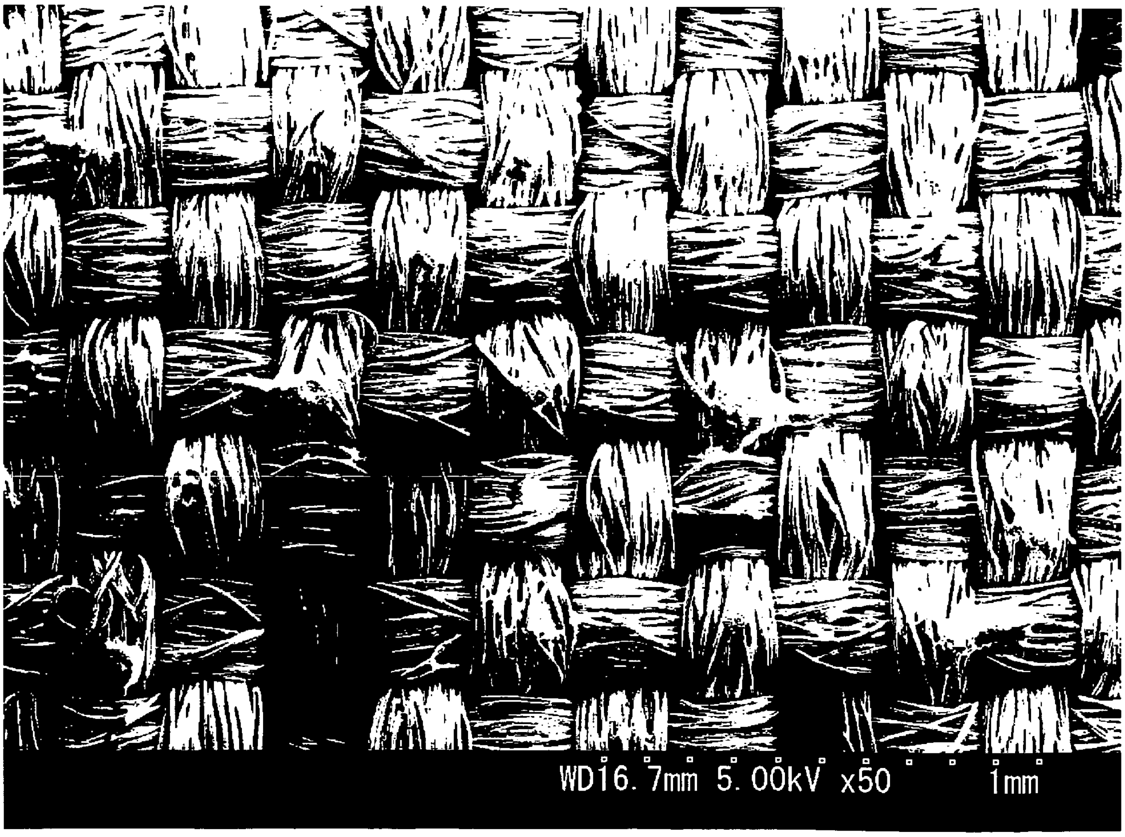

[Fig. 3]

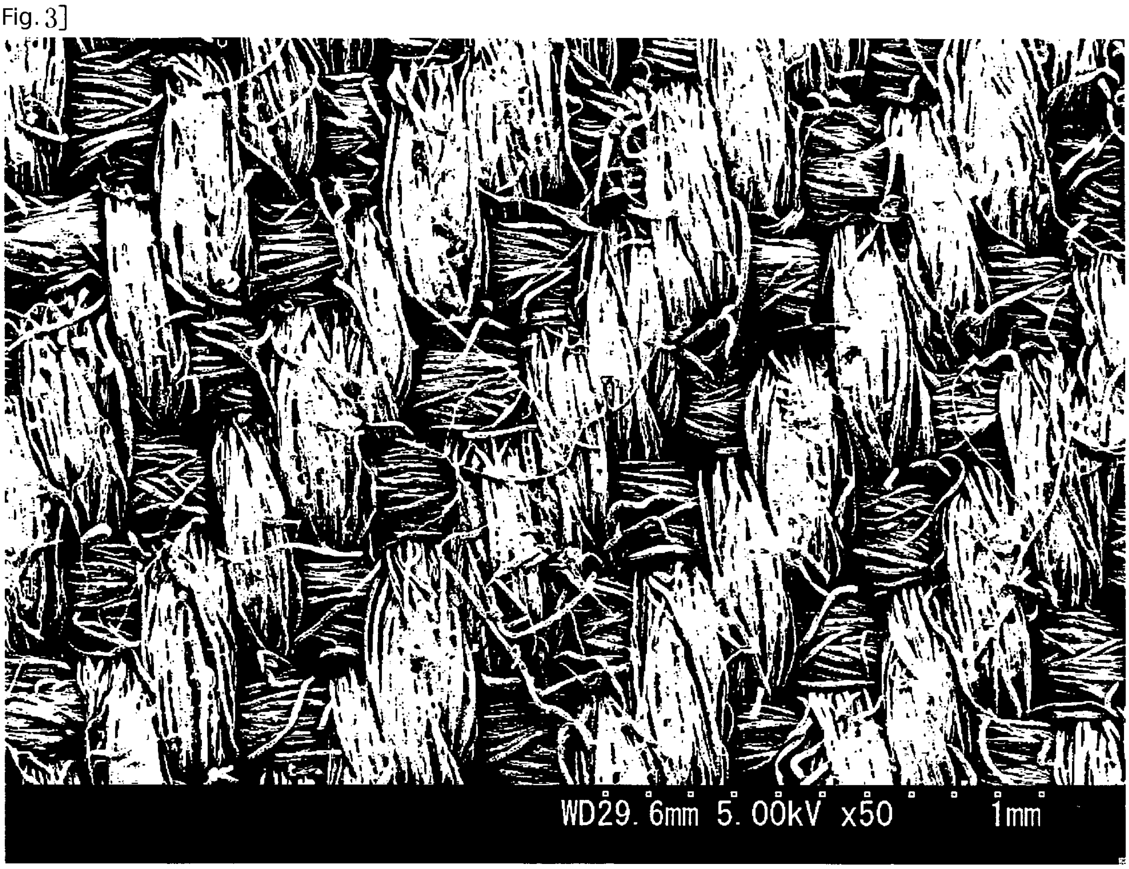


[Fig. 4]

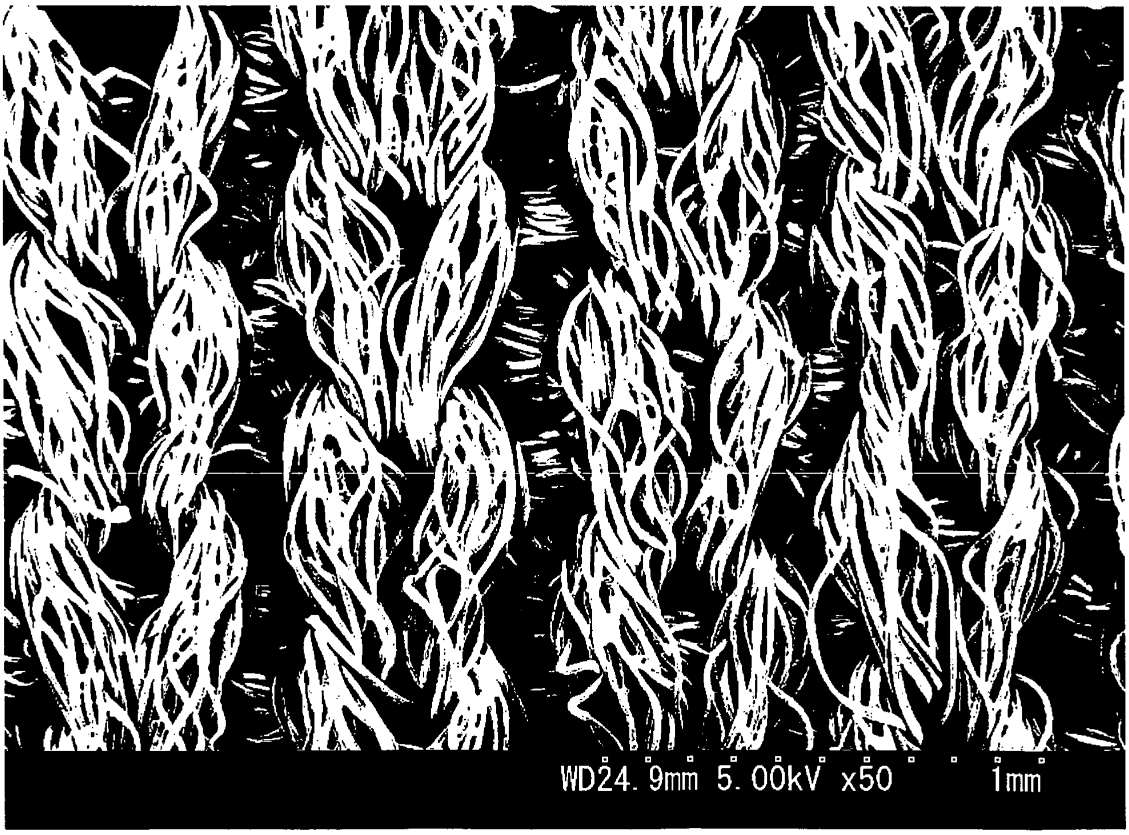

[Fig. 5]

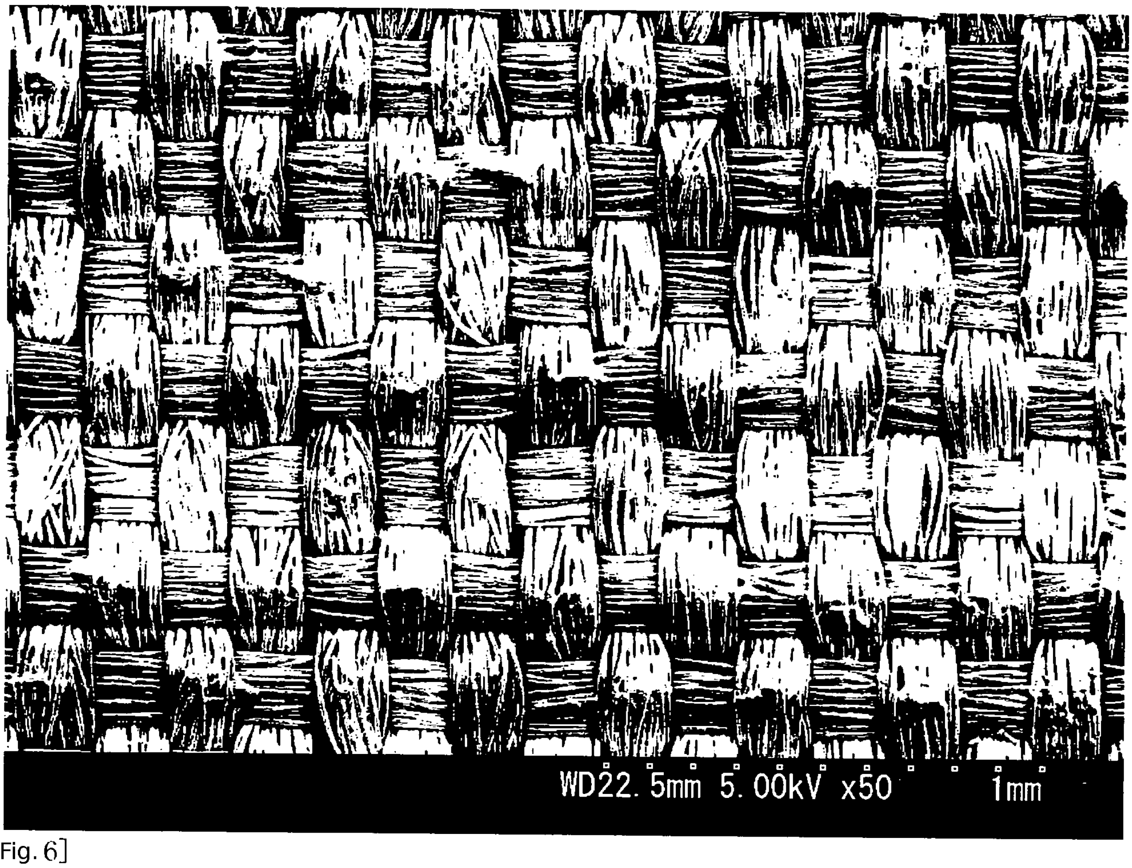


[Fig. 6]

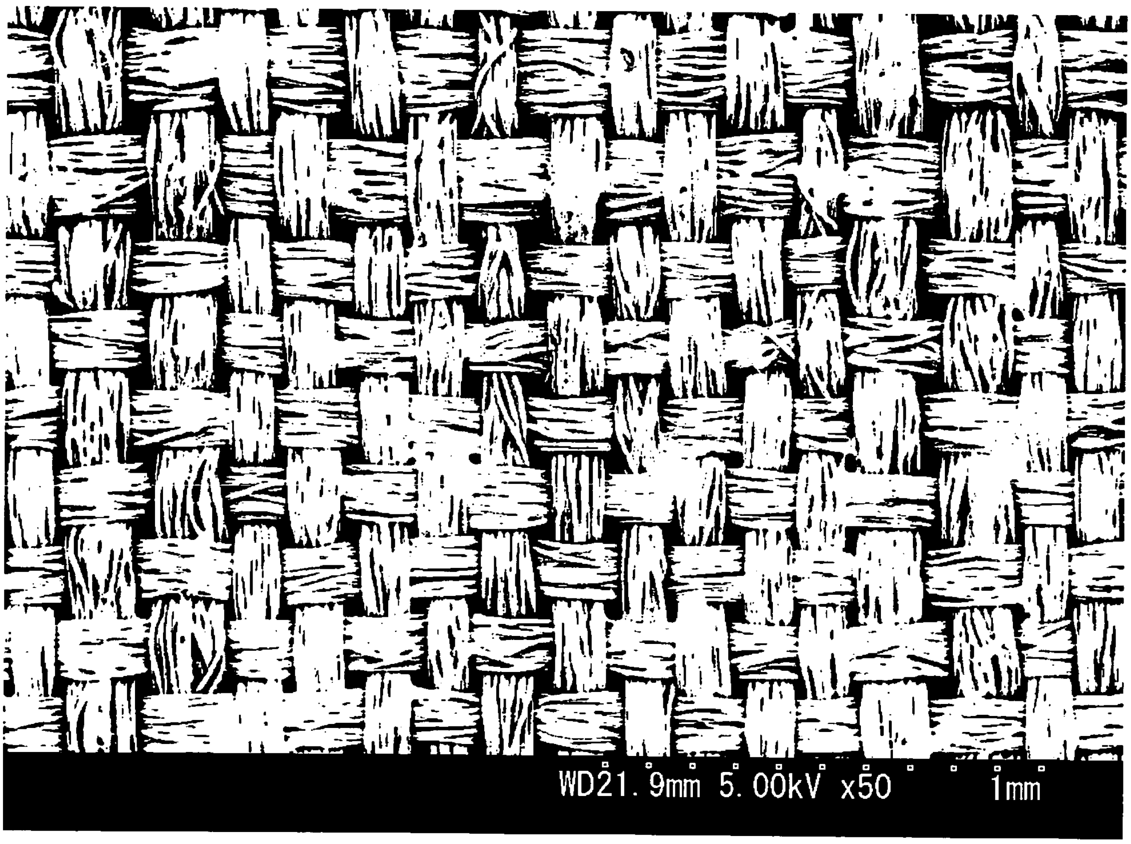

[Fig. 7]

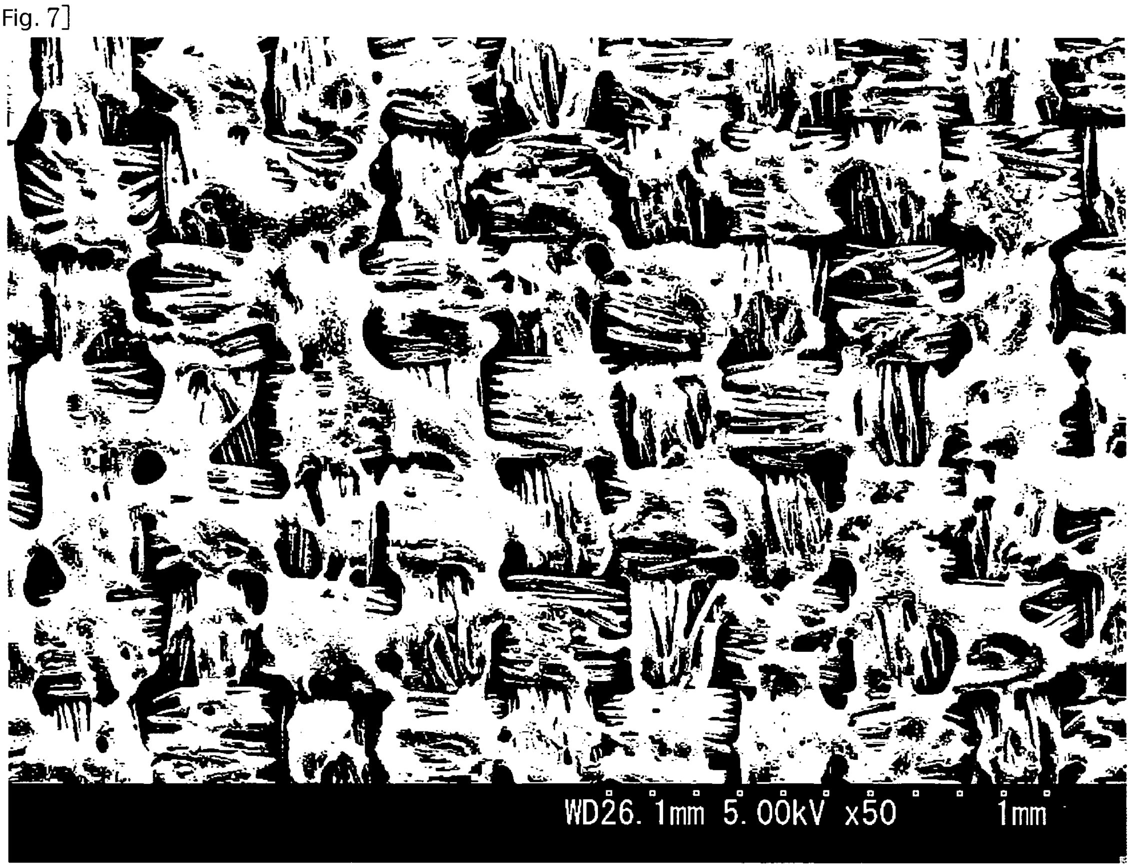


[Fig. 8]

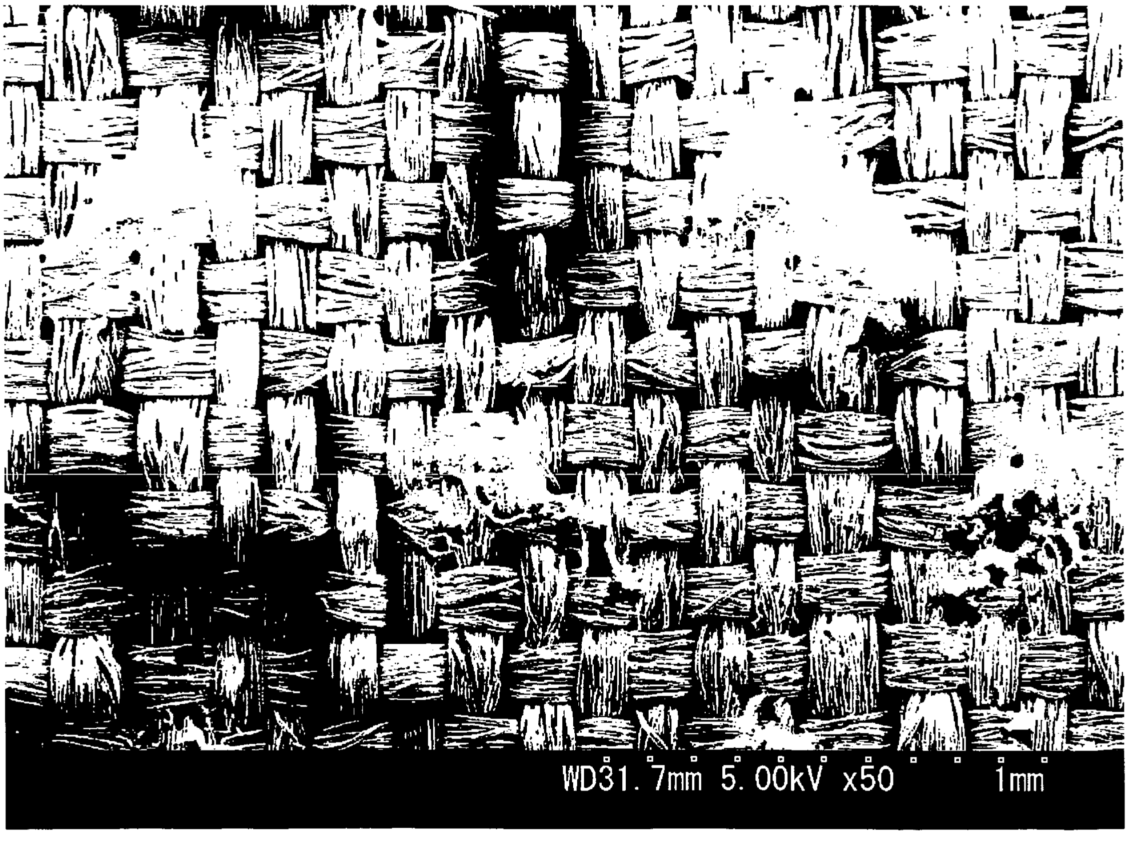

[Fig. 9]

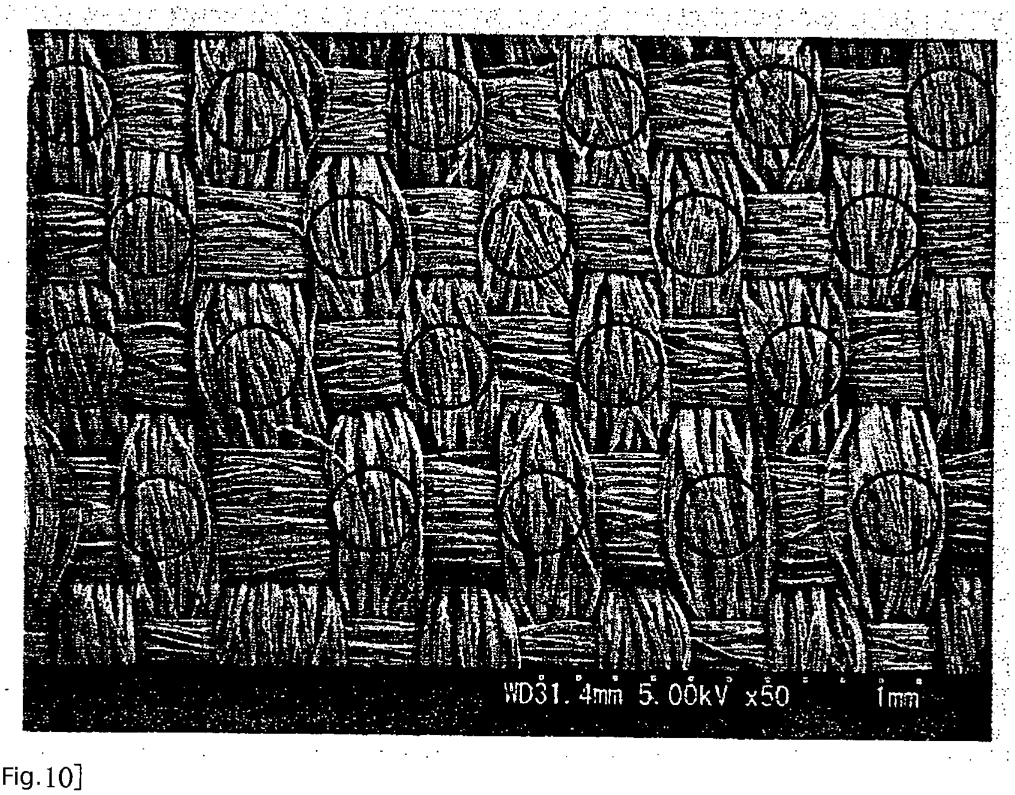


[Fig.10]

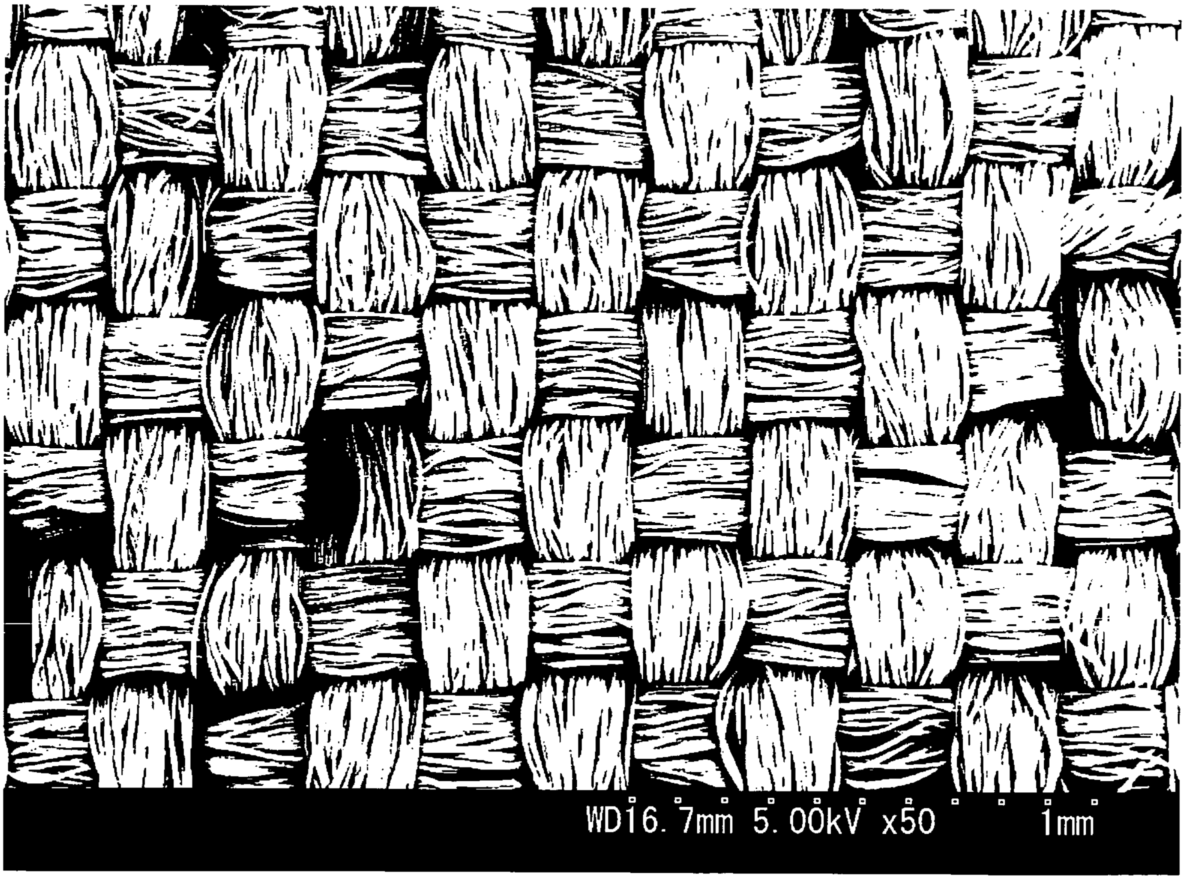

[Fig. 11]

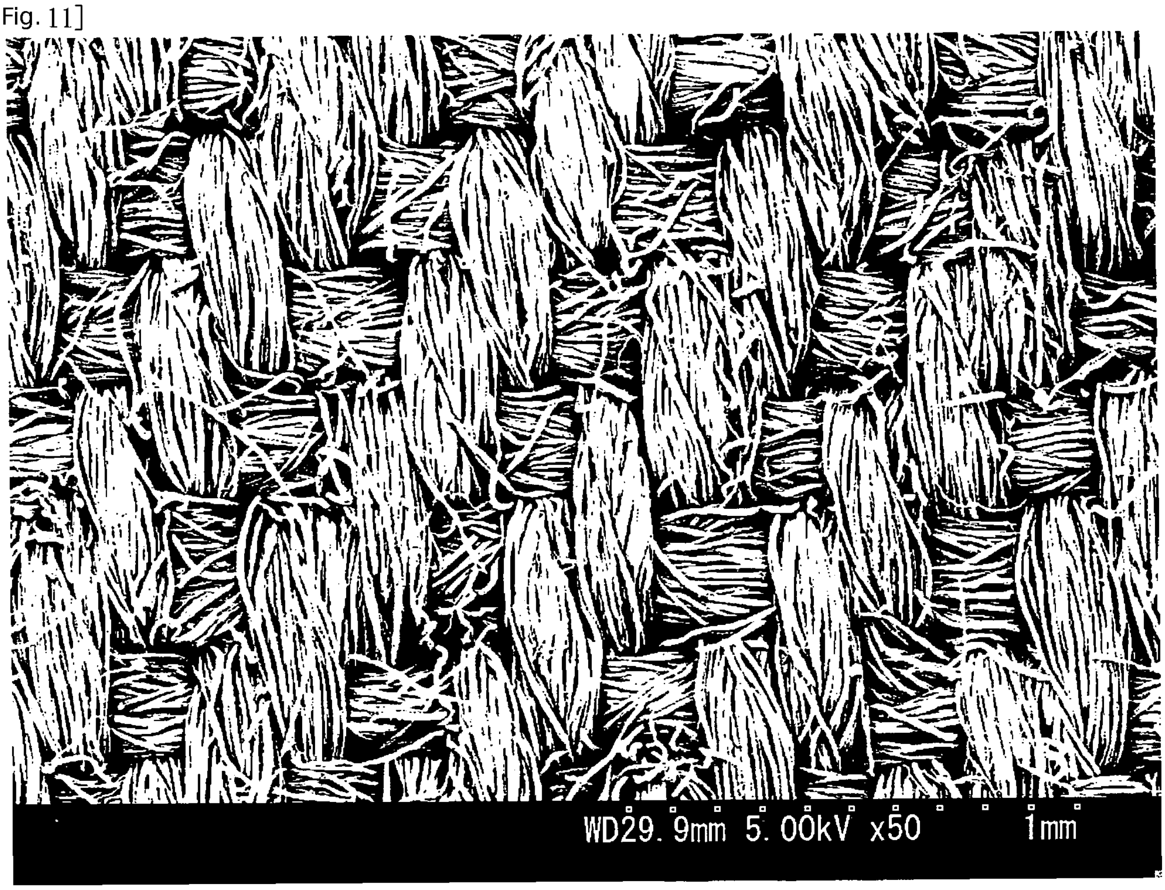


[Fig. 12]

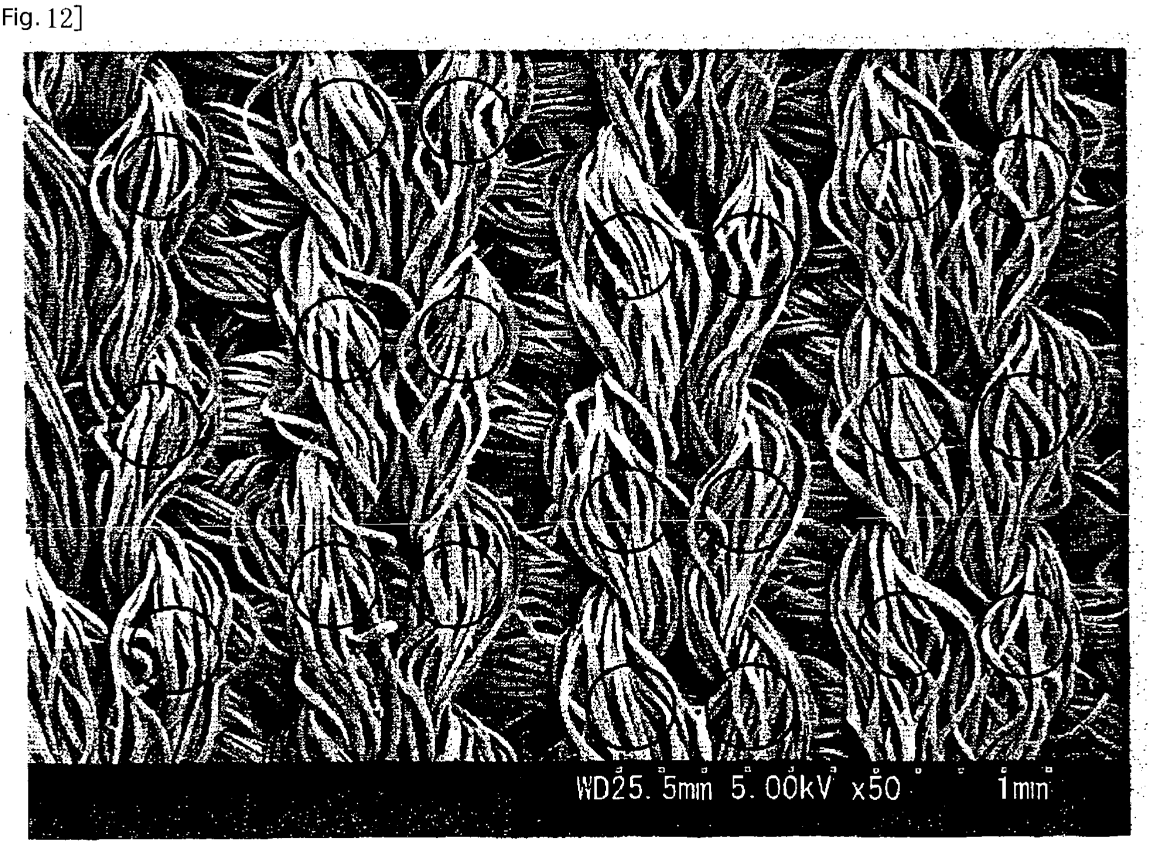

[Fig. 13]

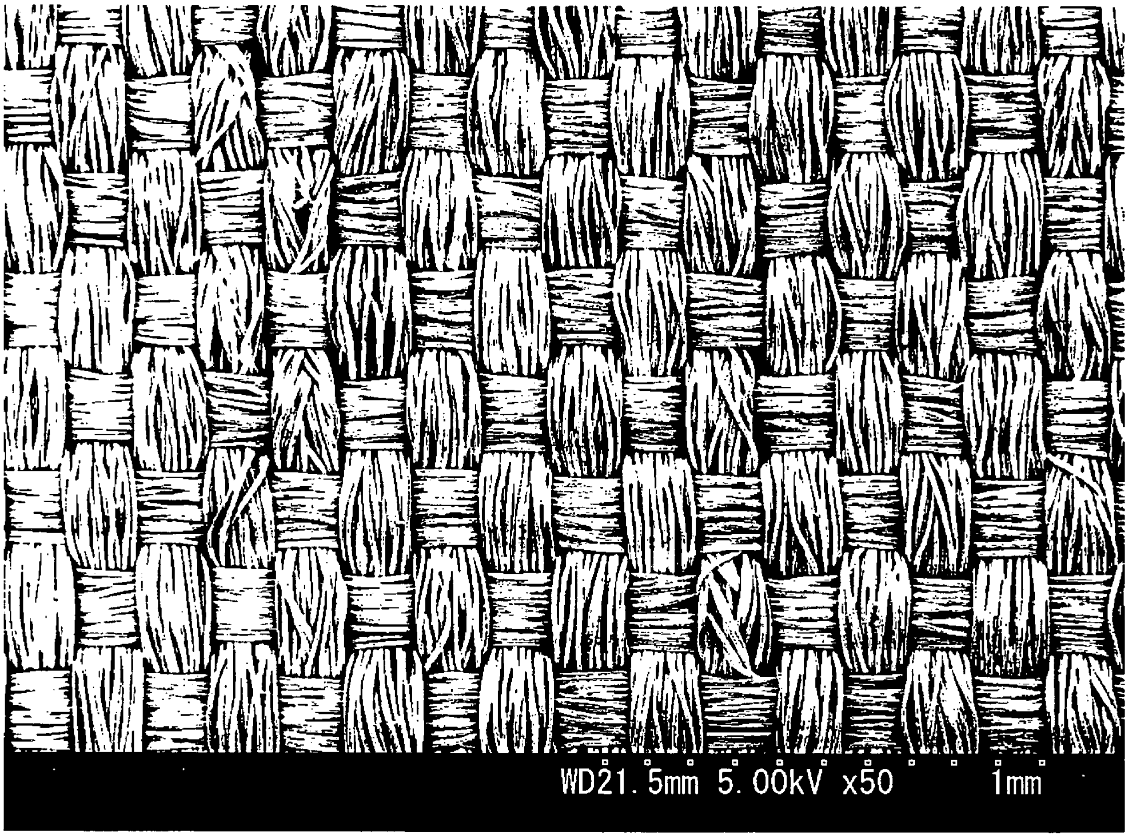


[Fig.14]

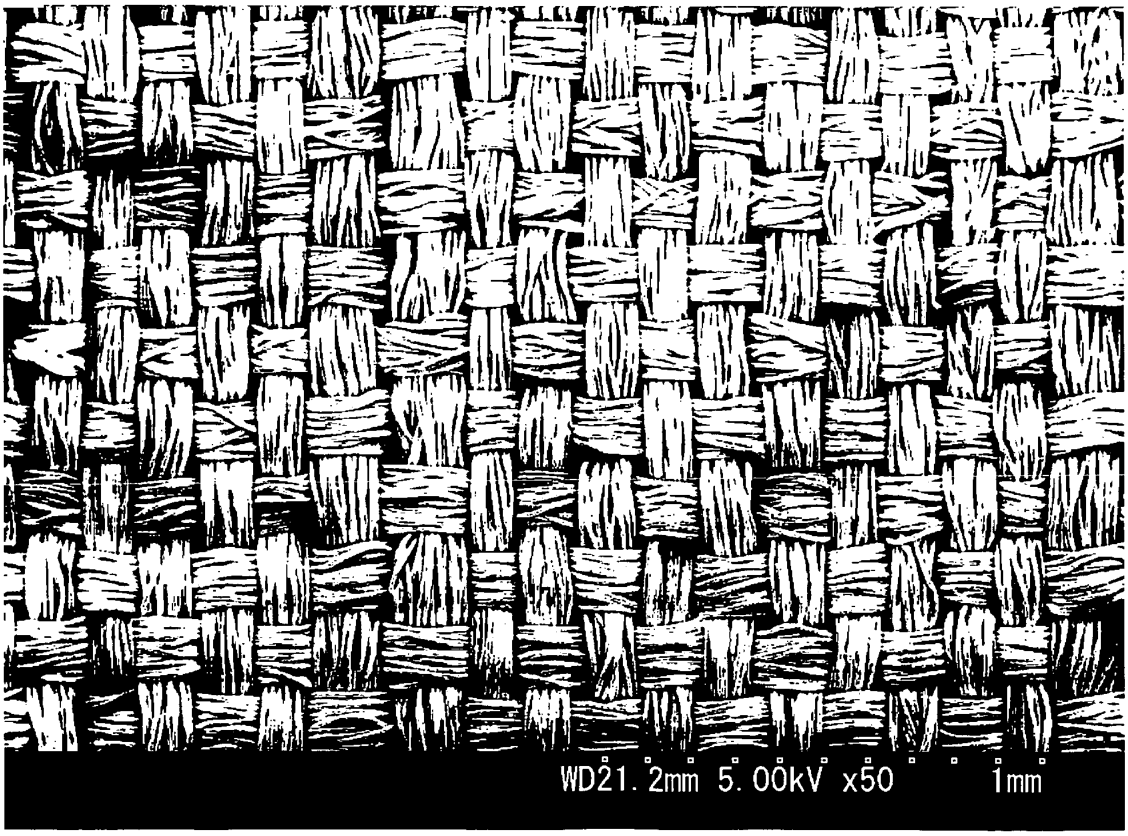

[Fig. 15]

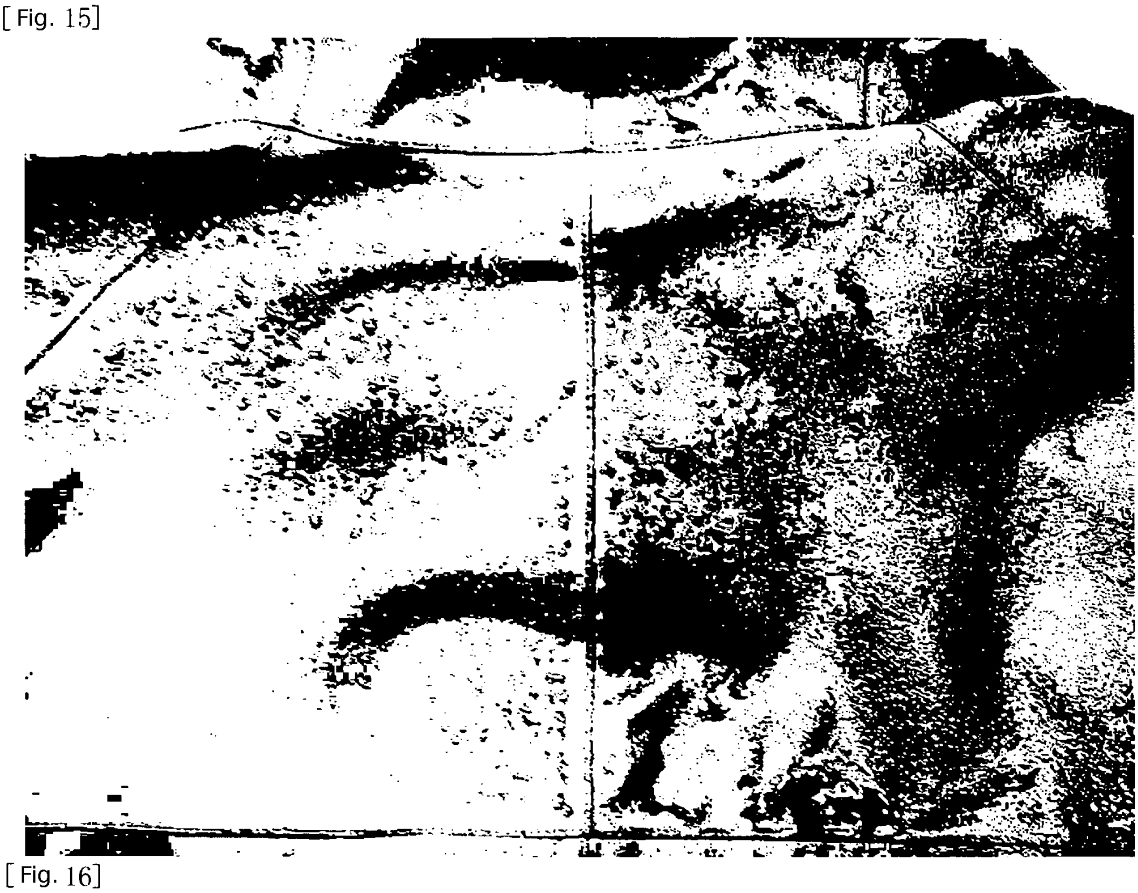

[Fig. 16]

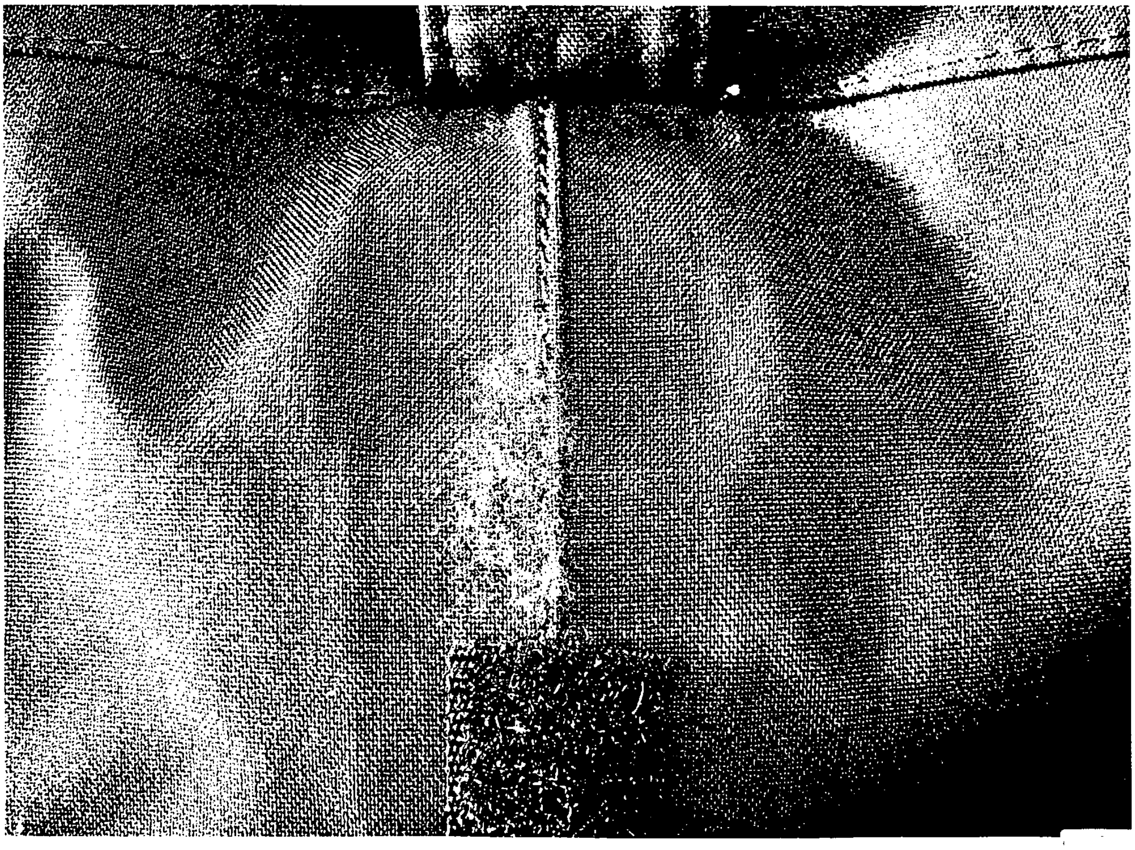

[Fig. 17]

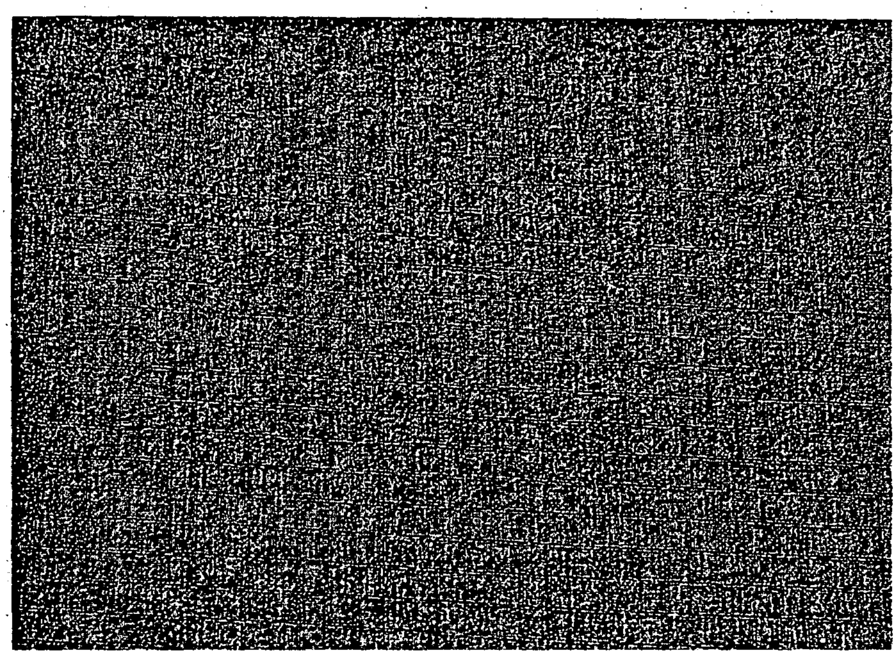

[Fig.18]

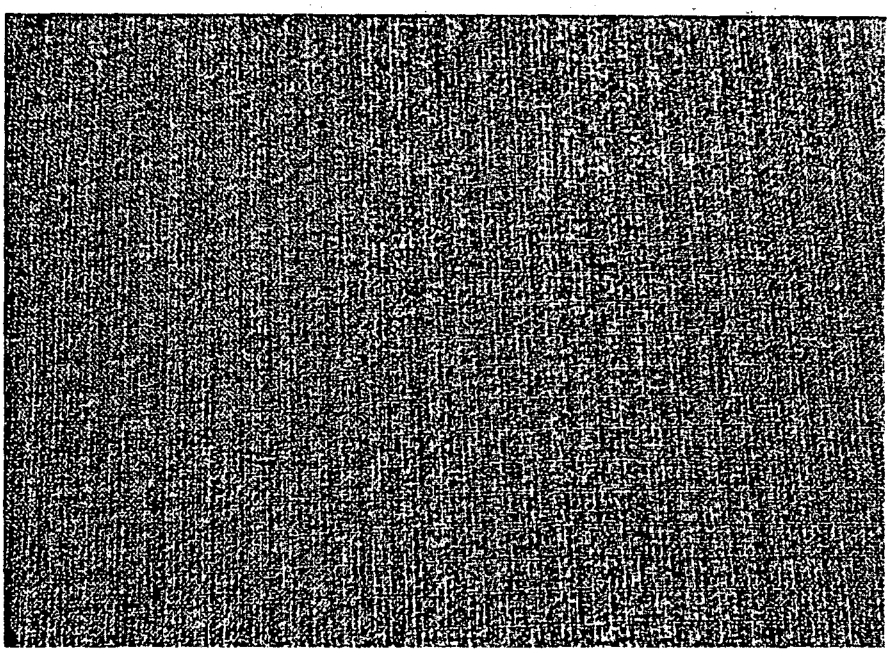

[Fig. 19]

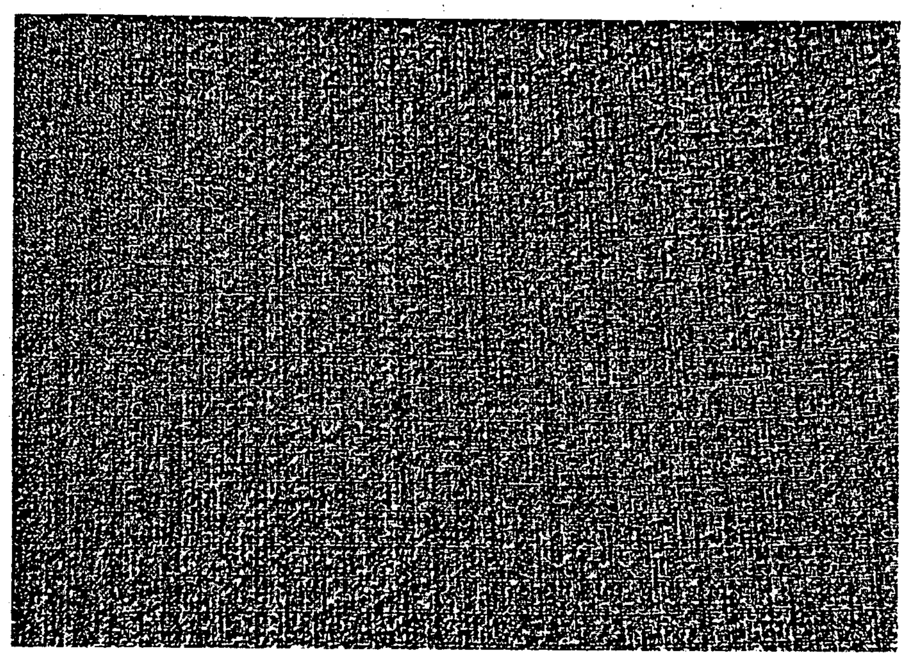

[Fig. 20]

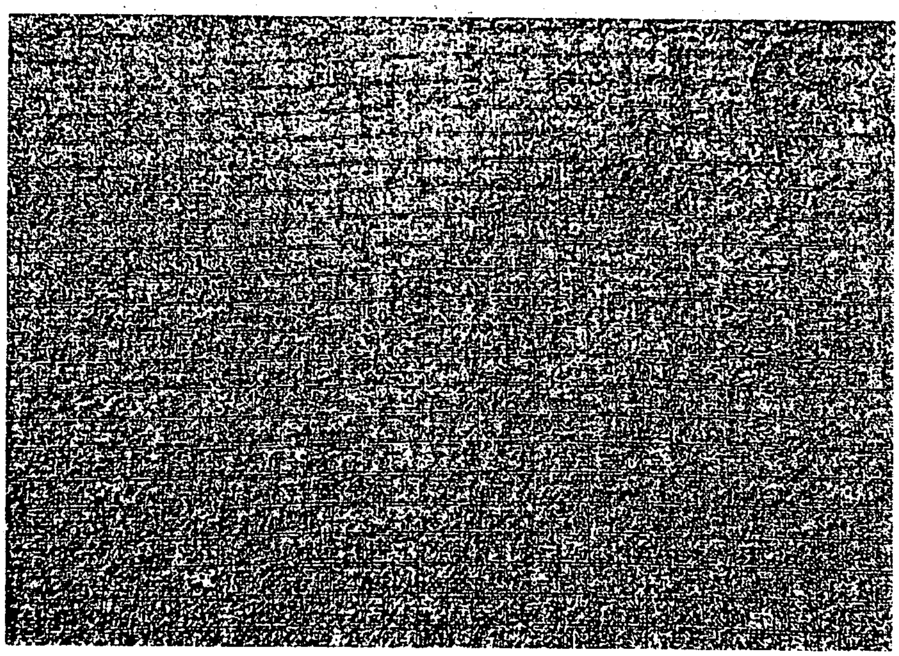

[Fig. 21]

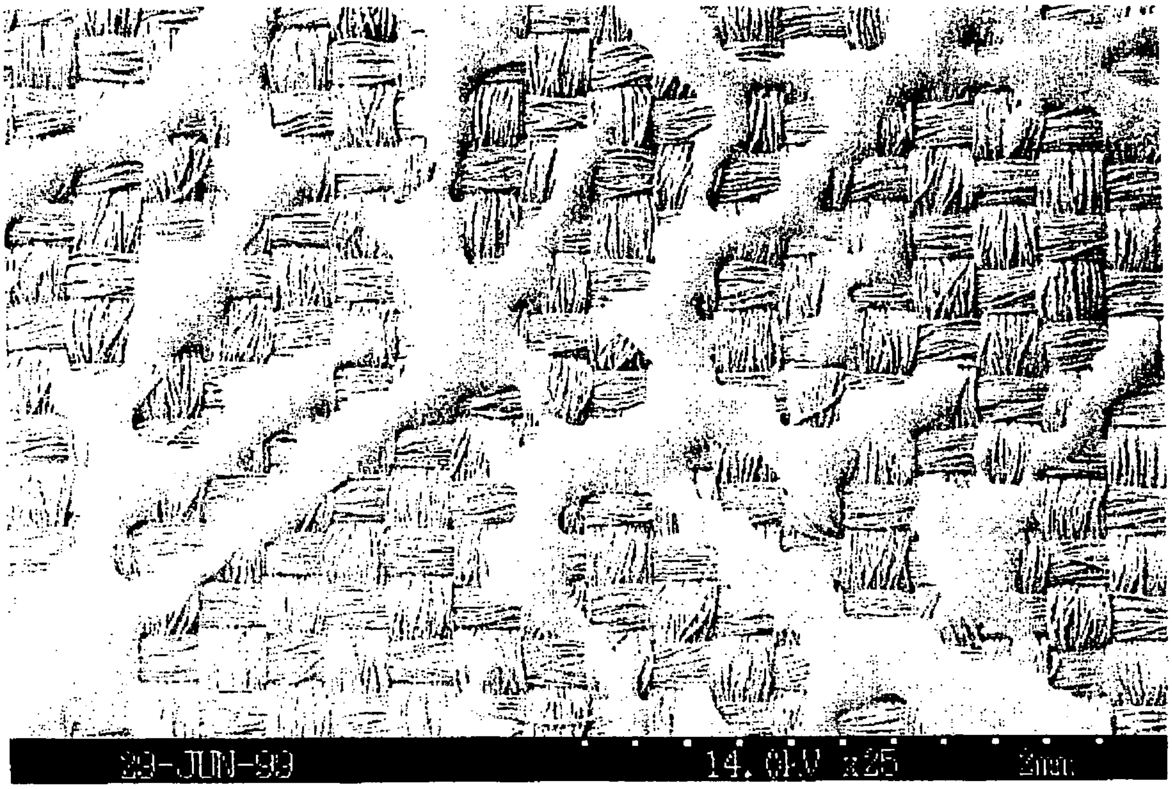

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0112889 A
- WO 9422928 A
- US 4194041 A